# EUROPEAN PATENT APPLICATION

(11) **EP 4 475 573 A1**
(43) Date of publication of application: **11.12.2024**
(21) Application number: 23777784.2
(22) Date of filing: 08.03.2023
(51) Int. Cl.: H04W 4/40, H04W 52/02, H04W 52/08

(54) **COMMUNICATION METHOD AND APPARATUS**

(30) Priority: 28.03.2022 CN 202210317116; 09.08.2022 CN 202210953001
(71) Applicant: Huawei Technologies Co., Ltd., Shenzhen, Guangdong 518129 (CN)
(72) Inventor: YING, Jiangwei, Shenzhen, Guangdong 518129 (CN)
(74) Representative: Thun, Clemens
(86) International application number: PCT/CN2023/080263
(87) International publication number: WO 2023/185406

(57) **Abstract**

Embodiments of this application provide a communication method and apparatus. A first terminal device sends a first V2X service based on a first layer 2 address pair, and sends a second V2X service based on a second layer 2 address pair. Both a destination layer 2 address in the first layer 2 address pair and a destination layer 2 address in the second layer 2 address pair correspond to a second terminal device or a terminal device group. A transmission configuration of the first V2X service is different from a transmission configuration of the second V2X service. Because the first terminal device allocates V2X services with different transmission configurations to different destination group L2 addresses for sending, it can be ensured that the first terminal device can enable DRX for some V2X services, to effectively save power of the first terminal device, and can disable DRX for some V2X services, to meet a QoS requirement of the V2X services.

## Description

### CROSS-REFERENCE TO RELATED APPLICATIONS

This application claims priorities to Chinese Patent Application No. 202210317116.2, filed with the China National Intellectual Property Administration on March 28, 2022 and entitled "COMMUNICATION METHOD AND APPARATUS", and to Chinese Patent Application No. 202210953001.2, filed with the China National Intellectual Property Administration on August 9, 2022 and entitled "COMMUNICATION METHOD AND APPARATUS", which are incorporated herein by reference in their entireties.

### TECHNICAL FIELD

This application relates to the field of communication technologies, and in particular, to a communication method and apparatus.

### BACKGROUND

Currently, terminal devices can directly communicate with each other through a ProSe communication 5 (ProSe communication 5, PC5) interface, for example, perform V2X service transmission. When performing PC5 communication, the terminal device may enable a discontinuous reception (Discontinuous Reception, DRX) mechanism for power saving.

In conventional technologies, DRX is in one-to-one correspondence with a target layer 2 (L2) address. Specifically, for V2X services corresponding to a same target L2 address, the terminal device enables the DRX mechanism or does not enable the DRX mechanism, to perform transmission. However, one terminal device may communicate with a plurality of terminal devices through a PC5 interface, and may further establish a plurality of PC unicast links with another terminal device. Therefore, for a same terminal device, the terminal device may have both a V2X service for which the DRX needs to be enabled and a V2X service for which the DRX does not need to be enabled. For the foregoing scenario, there is still no solution for the terminal device to deal with.

### SUMMARY

Embodiments of this application provide a communication method and apparatus. In a scenario in which a terminal device has both a V2X service for which DRX needs to be enabled and a V2X service for which the DRX does not need to be enabled, an SL DRX mechanism is enabled for some services to effectively save power of the terminal device while the SL DRX mechanism is disabled for some services to meet QoS requirements of the services and ensure user service experience.

According to a first aspect, a communication method is provided. The method may be performed by a terminal device of a transmitter, or may be performed by a chip in a terminal device of a transmitter.

An example in which the method is performed by a first terminal device is used. The method includes: The first terminal device sends a first V2X service based on a first layer 2 address pair; and the first terminal device sends a second V2X service based on a second layer 2 address pair. Both a destination layer 2 address in the first layer 2 address pair and a destination layer 2 address in the second layer 2 address pair correspond to a second terminal device or a terminal device group. A transmission configuration of the first V2X service is a discontinuous reception DRX mode, and a transmission configuration of the second V2X service is a non-DRX mode. Alternatively, a transmission configuration of the first V2X service is a non-DRX mode, and a transmission configuration of the second V2X service is a DRX mode.

In the foregoing solution, the first terminal device allocates V2X services with different transmission configurations (corresponding to the DRX mode and corresponding to the non-DRX mode) to different destination group L2 addresses for sending, to ensure that the first terminal device can enable DRX for some V2X services, to effectively save power of the first terminal device, and can disable the DRX for some V2X services, to meet a QoS requirement of the V2X groupcast services.

In a possible design, the first terminal device may obtain the first layer 2 address pair based on the transmission configuration of the first V2X service, and obtain the second layer 2 address pair based on the transmission configuration of the second V2X service.

In this way, different layer 2 address pairs may be allocated to the V2X services with different transmission configurations.

In a possible design, the first terminal device may obtain a mapping relationship between a V2X service and a transmission configuration from a PCF network element, and further determine, based on the mapping relationship, the transmission configuration corresponding to the first V2X service and the transmission configuration corresponding to the second V2X service.

In a possible design, the transmission configuration of the first V2X service is the DRX mode. The first terminal device further sends the first V2X service based on a DRX parameter corresponding to the DRX mode.

In a possible design, both the destination layer 2 address in the first layer 2 address pair and the destination layer 2 address in the second layer 2 address pair correspond to the second terminal device (that is, a unicast scenario).

After the first V2X service is triggered, a V2X layer of the first terminal device determines the first layer 2 address pair. An access stratum AS layer of the first terminal device sends capability information of the first terminal device to the second terminal device based on the first layer 2 address pair, and/or receives capability information of the second terminal device, where the capability information of the first terminal device and/or the capability information of the second terminal device may be used for determining that communication between the first terminal device and the second terminal device may be performed by using different layer 2 address pairs that are for sending the V2X services with different transmission configurations. The AS layer of the first terminal device sends first indication information to the V2X layer of the first terminal device, where the first indication information indicates that the communication between the first terminal device and the second terminal device may be performed by using the different layer 2 address pairs that are for sending the V2X services with different transmission configurations. After the second V2X service is triggered, the V2X layer of the first terminal device determines the second layer 2 address pair based on the first indication information.

In this way, in the unicast scenario, the V2X layer of the first terminal device may allocate the V2X services with different transmission configurations to different destination L2 addresses for sending.

In a possible design, both the destination layer 2 address in the first layer 2 address pair and the destination layer 2 address in the second layer 2 address pair correspond to the terminal device group, and both the first V2X service and the second V2X service are groupcast services of the terminal device group (that is, a groupcast scenario).

After the groupcast service is triggered, an application layer App layer of the first terminal device determines a first App layer group identifier based on the transmission configuration of the first V2X service, determines a second App layer group identifier based on the transmission configuration of the second V2X service, and sends the first App layer group identifier and the second App layer group identifier to a V2X layer of the first terminal device. The V2X layer of the first terminal device determines the destination layer 2 address in the first layer 2 address pair based on the first App layer group identifier, and determines the destination layer 2 address in the second layer 2 address pair based on the second App layer group identifier.

In this way, in the groupcast scenario, the App layer of the first terminal device may allocate different App layer group identifiers to V2X services corresponding to different transmission configurations in a same terminal device group. The V2X layer converts the App layer group identifiers obtained from the App layer to destination group layer 2 addresses, to implement that the V2X services with different transmission configurations correspond to different destination group layer 2 addresses.

In a possible design, the App layer of the first terminal device receives the transmission configuration of the first V2X service and the transmission configuration of the second V2X service from the V2X layer of the first terminal device.

In this way, support may be provided for the App layer to allocate different App layer group identifiers to the V2X services with different transmission configurations.

In a possible design, both the destination layer 2 address in the first layer 2 address pair and the destination layer 2 address in the second layer 2 address pair correspond to the terminal device group. Both the first V2X service and the second V2X service are the groupcast services of the terminal device group.

After the groupcast service is triggered, the App layer of the first terminal device sends an App layer group identifier corresponding to the groupcast service to the V2X layer of the first terminal device. The V2X layer of the first terminal device determines the destination layer 2 address in the first layer 2 address pair based on the App layer group identifier and the transmission configuration of the first V2X service, and determines the destination layer 2 address in the second layer 2 address pair based on the App layer group identifier and the transmission configuration of the second V2X service.

In this way, in the groupcast scenario, at the App layer, various types of V2X services corresponding to a same terminal device group correspond to a same App layer group identifier. The V2X layer allocates different destination group layer 2 addresses to the V2X services with different transmission configurations, to implement that the V2X services with different transmission configurations correspond to different destination group layer 2 addresses.

In a possible design, the first terminal device preconfigures an algorithm for converting an App layer group identifier to a destination layer 2 address. Alternatively, the first terminal device obtains, from the policy control function PCF network element, an algorithm for converting the App layer group identifier to a destination layer 2 address. Different transmission configurations correspond to different conversion algorithms.

In this way, support may be provided for the V2X layer to allocate different destination group layer 2 addresses to the V2X services with different transmission configurations.

In a possible design, the first V2X service corresponds to a first service type, and the second V2X corresponds to a second service type.

In a possible design, the first terminal device determines, based on the service type of the first V2X service, that the transmission configuration of the first V2X service is the non-DRX mode or the DRX mode. In addition, the first terminal device determines, based on the service type of the second V2X service, that the transmission configuration of the second V2X service is the non-DRX mode or the DRX mode.

In a possible design, that the first terminal device determines, based on the service type of the first V2X service, that the transmission configuration of the first V2X service is the non-DRX mode or the DRX mode includes: The first terminal device obtains configuration information, where the configuration information includes a mapping relationship between a service type and a transmission configuration. The first terminal device determines a transmission configuration that is found based on the mapping relationship and that corresponds to the service type of the first V2X service, as the transmission configuration of the first V2X service. Alternatively, if no transmission configuration corresponding to the service type of the first V2X service exists in the mapping relationship, the first terminal device determines that the transmission configuration of the first V2X service is the non-DRX mode.

In a possible design, both the destination layer 2 address in the first layer 2 address pair and the destination layer 2 address in the second layer 2 address pair correspond to the terminal device group. The method further includes: The first terminal device obtains configuration information, where the configuration information includes a mapping relationship between a service type and a transmission configuration. The first terminal device determines a transmission configuration that is found based on the mapping relationship and that corresponds to a service type of a third V2X service, as a transmission configuration of the third V2X service. Alternatively, if no transmission configuration corresponding to a service type of a third V2X service exists in the mapping relationship, the first terminal device determines that the transmission configuration of the third V2X service is the non-DRX mode. The third V2X service is a V2X service of the terminal device group, and the third V2X service is different from the first V2X service and the second V2X service.

In a possible design, both the destination layer 2 address in the first layer 2 address pair and the destination layer 2 address in the second layer 2 address pair correspond to the terminal device group. The first terminal device obtaining the first layer 2 address pair based on the transmission configuration of the first V2X service, and obtaining the second layer 2 address pair based on the transmission configuration of the second V2X service includes: An App layer of the first terminal device allocates a first App layer group identifier to a first App layer group, where the first App layer group includes at least one V2X service of the terminal device group, and a transmission configuration of the V2X service in the first App layer group is the same. The App layer of the first terminal device allocates a second App layer group identifier to a second App layer group, where the second App layer group includes at least one V2X service of the terminal device group, and a transmission configuration of the V2X service in the second App layer group is the same. The transmission configuration of the V2X service in the first App layer group is different from the transmission configuration of the V2X service in the second App layer group. The first V2X service belongs to the first App layer group, and the second V2X service belongs to the second App layer group.

In a possible design, both the destination layer 2 address in the first layer 2 address pair and the destination layer 2 address in the second layer 2 address pair correspond to the terminal device group. The first terminal device obtaining the first layer 2 address pair based on the transmission configuration of the first V2X service, and obtaining the second layer 2 address pair based on the transmission configuration of the second V2X service includes: A V2X layer of the first terminal device determines, for a first V2X service group, the destination layer 2 address in the first layer 2 address pair based on a transmission configuration of a V2X service in the first V2X service group, where the first V2X service group includes at least one V2X service of the terminal device group, and the transmission configuration of the V2X service in the first V2X service group is the same. The V2X layer of the first terminal device determines, for a second V2X service group, the destination layer 2 address in the second layer 2 address pair based on a transmission configuration of a V2X service in the second V2X service group, where the second V2X service group includes at least one V2X service of the terminal device group, and the transmission configuration of the V2X service in the second V2X service group is the same. The transmission configuration of the V2X service in the first V2X service group is different from the transmission configuration of the V2X service in the second V2X service group.

The first V2X service belongs to the first V2X service group, and the second V2X service belongs to the second V2X service group.

According to a second aspect, a communication method is provided. The method may be performed by a terminal device of a receiver, or may be performed by a chip in a terminal device of a receiver.

An example in which the method is performed by a second terminal device is used. The method includes: The second terminal device receives a first V2X service from a first terminal device based on a first layer 2 address pair. The second terminal device receives a second V2X service from the first terminal device based on a second layer 2 address pair. Both a destination layer 2 address in the first layer 2 address pair and a destination layer 2 address in the second layer 2 address pair correspond to the second terminal device or a terminal device group to which the second terminal device belongs. A transmission configuration of the first V2X service is a DRX mode, and a transmission configuration of the second V2X service is a non-DRX mode; or a transmission configuration of the first V2X service is a non-DRX mode, and a transmission configuration of the second V2X service is a DRX mode.

In a possible design, the second terminal device obtains the first layer 2 address pair based on the transmission configuration of the first V2X service, and obtains the second layer 2 address pair based on the transmission configuration of the second V2X service.

In a possible design, the transmission configuration of the first V2X service is the DRX mode. The method further includes: The second terminal device receives the first V2X service from the first terminal device based on a DRX parameter corresponding to the DRX mode.

In a possible design, both the destination layer 2 address in the first layer 2 address pair and the destination layer 2 address in the second layer 2 address pair correspond to the second terminal device. After the first V2X service is triggered, a V2X layer of the second terminal device determines the first layer 2 address pair. An access stratum AS layer of the second terminal device receives capability information of the first terminal device from the first terminal device based on the first layer 2 address pair, and/or sends capability information of the second terminal device to the first terminal device, where the capability information of the first terminal device indicates that the first terminal device has a capability of simultaneously supporting the DRX mode and the non-DRX mode, and the capability information of the second terminal device indicates that the second terminal device has the capability of simultaneously supporting the DRX mode and the non-DRX mode. The AS layer of the second terminal device sends first indication information to the V2X layer of the second terminal device, where the first indication information indicates that communication between the first terminal device and the second terminal device may be performed by using different layer 2 address pairs that are for receiving V2X services with different transmission configurations. After the second V2X service is triggered, the V2X layer of the second terminal device determines the second layer 2 address pair based on the first indication information.

For technical effects of the foregoing designs, refer to technical effects of corresponding designs in the first aspect. Details are not described herein again.

In a possible design, both the destination layer 2 address in the first layer 2 address pair and the destination layer 2 address in the second layer 2 address pair correspond to the terminal device group. Both the first V2X service and the second V2X service are groupcast services of the terminal device group. The method further includes: The second terminal device determines a groupcast service of interest. The second terminal device monitors a V2X service based on a destination layer 2 address corresponding to the groupcast service of interest.

In a possible design, the second terminal device determines, based on the capability information of the second terminal device, that the communication between the first terminal device and the second terminal device may be performed by using the different layer 2 address pairs that are for receiving the V2X services with different transmission configurations. The second terminal device allocates different receiving capabilities for the first V2X service and the second V2X service.

In this way, the second terminal device may enable DRX for some V2X services, and provide support in disabling the DRX for some other V2X services.

In a possible design, the first V2X service corresponds to a first service type, and the second V2X corresponds to a second service type.

In a possible design, the second terminal device determines, based on the service type of the first V2X service, that the transmission configuration of the first V2X service is the non-DRX mode or the DRX mode. The second terminal device determines, based on the service type of the second V2X service, that the transmission configuration of the second V2X service is the non-DRX mode or the DRX mode.

In a possible design, that the second terminal device determines, based on the service type of the first V2X service, that the transmission configuration of the first V2X service is the non-DRX mode or the DRX mode includes: The second terminal device obtains configuration information, where the configuration information includes a mapping relationship between a service type and a transmission configuration. The second terminal device determines a transmission configuration that is found based on the mapping relationship and that corresponds to the service type of the first V2X service, as the transmission configuration of the first V2X service. Alternatively, if no transmission configuration corresponding to the service type of the first V2X service exists in the mapping relationship, the first terminal device determines that the transmission configuration of the first V2X service is the non-DRX mode.

In a possible design, both the destination layer 2 address in the first layer 2 address pair and the destination layer 2 address in the second layer 2 address pair correspond to the terminal device group. The method further includes: The first terminal device obtains configuration information, where the configuration information includes a mapping relationship between a service type and a transmission configuration. The first terminal device determines a transmission configuration that is found based on the mapping relationship and that corresponds to a service type of a third V2X service, as a transmission configuration of the third V2X service. Alternatively, if no transmission configuration corresponding to a service type of a third V2X service exists in the mapping relationship, the first terminal device determines that a transmission configuration of the third V2X service is the non-DRX mode. The third V2X service is a V2X service of the terminal device group, and the third V2X service is different from the first V2X service and the second V2X service.

In a possible design, both the destination layer 2 address in the first layer 2 address pair and the destination layer 2 address in the second layer 2 address pair correspond to the terminal device group.

The second terminal device obtaining the first layer 2 address pair based on the transmission configuration of the first V2X service, and obtaining the second layer 2 address pair based on the transmission configuration of the second V2X service includes: An App layer of the second terminal device allocates a first App layer group identifier to a first App layer group, where the first App layer group includes at least one V2X service of the terminal device group, and a transmission configuration of the V2X service in the first App layer group is the same. The App layer of the second terminal device allocates a second App layer group identifier to a second App layer group, where the second App layer group includes at least one V2X service of the terminal device group, and a transmission configuration of the V2X service in the second App layer group is the same. A transmission configuration of the V2X service in the first App layer group is different from the transmission configuration of the V2X service in the second App layer group.

The first V2X service belongs to the first App layer group, and the second V2X service belongs to the second App layer group.

In a possible design, both the destination layer 2 address in the first layer 2 address pair and the destination layer 2 address in the second layer 2 address pair correspond to the terminal device group. The second terminal device obtaining the first layer 2 address pair based on the transmission configuration of the first V2X service, and obtaining the second layer 2 address pair based on the transmission configuration of the second V2X service includes: The V2X layer of the second terminal device determines, for a first V2X service group, the destination layer 2 address in the first layer 2 address pair based on a transmission configuration of a V2X service in the first V2X service group, where the first V2X service group includes at least one V2X service of the terminal device group, and the transmission configuration of the V2X service in the first V2X service group is the same. The V2X layer of the second terminal device determines, for a second V2X service group, the destination layer 2 address in the second layer 2 address pair based on a transmission configuration of a V2X service in the second V2X service group, where the second V2X service group includes at least one V2X service of the terminal device group, and the transmission configuration of the V2X service in the second V2X service group is the same. The transmission configuration of the V2X service in the first V2X service group is different from the transmission configuration of the V2X service in the second V2X service group.

The first V2X service belongs to the first V2X service group, and the second V2X service belongs to the second V2X service group.

According to a third aspect, a communication method is provided. The method may be performed by a terminal device of a transmitter, or may be performed by a chip in a terminal device of a transmitter.

An example in which the method is performed by a first terminal device. The method includes: The first terminal device determines that a transmission configuration of a first V2X service in at least two V2X services is a non-DRX mode, where the first V2X service is any one of the at least two V2X services. The first terminal device sends the at least two V2X services based on the non-DRX mode. Receivers of the at least two V2X services are all a second terminal device or a terminal device group.

In this solution, provided that a destination L2 address corresponds to a V2X service in the non-DRX mode, the first terminal device does not enable DRX, to ensure a QoS requirement and user service experience of the V2X service in the non-DRX mode.

In a possible design, the at least two V2X services correspond to a same destination layer 2 address. For example, a destination layer 2 address is an address of the second terminal device, or an address of a terminal device group to which the second terminal device belongs.

In a possible design, a V2X layer of the first terminal device determines that a transmission configuration of the first V2X service in the at least two V2X services is the non-DRX mode. The V2X layer of the first terminal device sends second indication information or sends no third indication information to an AS layer of the first terminal device, where the second indication information indicates the AS layer of the first terminal device not to enable a DRX mechanism, and the third indication information indicates the AS layer of the first terminal device to enable the DRX mechanism.

In this way, the V2X layer may determine whether to enable the DRX mechanism.

In a possible design, the at least two V2X services include the first V2X service and a second V2X service, and a transmission configuration of the second V2X service is a DRX mode. The method further includes: The V2X layer of the first terminal device sends the DRX mode, and the same destination layer 2 address corresponding to the at least two V2X services to the AS layer of the first terminal device, the non-DRX mode. The first terminal device sending the at least two V2X services based on the non-DRX mode includes: The AS layer of the first terminal device sends the at least two V2X services to the second terminal device or the terminal device group based on the non-DRX mode and the destination layer 2 address.

In this way, the AS layer may determine whether to enable the DRX mechanism.

In a possible design, the first V2X service corresponds to a first service type.

In a possible design, the first terminal device determines, based on the service type of the first V2X service, that the transmission configuration of the first V2X service is the non-DRX mode or the DRX mode.

In a possible design, that the first terminal device determines, based on the service type of the first V2X service, that the transmission configuration of the first V2X service is the non-DRX mode or the DRX mode includes: The first terminal device obtains configuration information, where the configuration information includes a mapping relationship between a service type and a transmission configuration. The first terminal device determines a transmission configuration that is found based on the mapping relationship and that corresponds to the service type of the first V2X service, as the transmission configuration of the first V2X service. Alternatively, if no transmission configuration corresponding to the service type of the first V2X service exists in the mapping relationship, the first terminal device determines that the transmission configuration of the first V2X service is the non-DRX mode.

In a possible design, both a destination layer 2 address in a first layer 2 address pair and a destination layer 2 address in a second layer 2 address pair correspond to the terminal device group. The method further includes: The first terminal device obtains configuration information, where the configuration information includes a mapping relationship between a service type and a transmission configuration. The first terminal device determines a transmission configuration that is found based on the mapping relationship and that corresponds to a service type of a third V2X service, as a transmission configuration of the third V2X service. Alternatively, if no transmission configuration corresponding to a service type of a third V2X service exists in the mapping relationship, the first terminal device determines that a transmission configuration of the third V2X service is the non-DRX mode. The third V2X service is a V2X service of the terminal device group, and the at least two V2X services include no third V2X service.

In a possible design, the receivers of the at least two V2X services are all the terminal device group. The method further includes: An App layer of the first terminal device delivers a service type of each V2X service of the terminal device group to the V2X layer of the first terminal device. The V2X layer of the first terminal device delivers the service type of each V2X service of the terminal device group and a transmission configuration of each V2X service of the terminal device group to the AS layer of the first terminal device. The first terminal device sending the at least one V2X service based on the non-DRX mode includes: The AS layer of the first terminal device determines that the transmission configuration of at least one V2X service of the terminal device group is the non-DRX mode. The AS layer of the first terminal device sends the at least two V2X services to the terminal device group based on the non-DRX mode and the destination layer 2 address.

According to a fourth aspect, a communication method is provided. The method may be performed by a terminal device of a receiver, or may be performed by a chip in a terminal device of a receiver.

An example in which the method is performed by a second terminal device is used. The method includes: The second terminal device determines that a transmission configuration of a first V2X service in at least two V2X services is a non-DRX mode, where the first V2X service is any one of the at least two V2X services. The second terminal device receives the at least two V2X services from a first terminal device based on the non-DRX mode. Transmitters of the at least two V2X services are all the second terminal device or a terminal device group to which the second terminal device belongs.

In a possible design, the at least two V2X services correspond to a same destination layer 2 address.

In a possible design, the method may further include: A V2X layer of the second terminal device determines that the transmission configuration of the first V2X service in the at least two V2X services is the non-DRX mode. A V2X layer of the second terminal device sends second indication information or send no third indication information to an AS layer of the second terminal device, where the second indication information indicates the AS layer of the second terminal device not to enable a DRX mechanism, and the third indication information indicates the AS layer of the second terminal device to enable the DRX mechanism.

In a possible design, the at least two V2X services include the first V2X service and a second V2X service. A transmission configuration of the second V2X service is a DRX mode. The V2X layer of the second terminal device sends the non-DRX mode, the DRX mode, and the same destination layer 2 address corresponding to the at least two V2X services to the AS layer of the second terminal device. The AS layer of the second terminal device determines whether to enable the DRX mechanism. For example, the AS layer receives the at least two V2X services from the first terminal device based on the non-DRX mode and the destination layer 2 address.

For technical effects of the foregoing designs, refer to technical effects of corresponding designs in the third aspect. Details are not described herein again.

According to a fifth aspect, a communication method is provided. The method may be performed by a terminal device of a transmitter, or may be performed by a chip in a terminal device of a transmitter.

An example in which the method is performed by a first terminal device is used. The method includes: The first terminal device determines a transmission configuration of a first V2X service in at least two V2X services, where the first V2X service is a V2X service with a highest priority in the at least two V2X services. If the transmission configuration of the first V2X service is a DRX mode, the first terminal device sends the at least two V2X services based on the DRX mode. Alternatively, if the transmission configuration of the first V2X service is a non-DRX mode, the first terminal device sends the at least two V2X services based on the non-DRX mode. Transmitters of the at least two V2X services are all a second terminal device or a terminal device group.

In the foregoing solution, the first terminal device determines, based on a transmission configuration corresponding to a V2X service with a high priority, whether to enable DRX, to ensure a QoS requirement and user service experience of the V2X service with the high priority as much as possible.

In a possible design, the at least two V2X services correspond to a same destination layer 2 address. For example, a destination layer 2 address is an address of the second terminal device, or an address of a terminal device group to which the second terminal device belongs.

In a possible design, the transmission configuration of the first V2X service in the at least two V2X services is the non-DRX mode. A V2X layer of the first terminal device sends second indication information or sends no third indication information to an AS layer of the first terminal device, where the second indication information indicates the AS layer of the first terminal device not to enable a DRX mechanism, and the third indication information indicates the AS layer of the first terminal device to enable the DRX mechanism.

Alternatively, the transmission configuration of the first V2X service in the at least two V2X services is a DRX mode. A V2X layer of the first terminal device sends second indication information or sends no third indication information to an AS layer of the first terminal device, where the second indication information indicates the AS layer of the first terminal device not to enable a DRX mechanism, and the third indication information indicates the AS layer of the first terminal device to enable the DRX mechanism.

In this way, the V2X layer may determine whether to enable the DRX mechanism.

In a possible design, the at least two V2X services include the first V2X service and a second V2X service, where the transmission configuration of the first V2X service is the non-DRX mode, a transmission configuration of the second V2X service is the DRX mode, and a priority of the first V2X service is higher than a priority of the second V2X service. A V2X layer of the first terminal device sends the DRX mode, the priority of the first V2X service, the non-DRX mode, the priority corresponding to the second V2X service, and the same destination layer 2 address corresponding to the at least two V2X services to the AS layer of the first terminal device. The AS layer of the first terminal device sends the at least two V2X services to the second terminal device or the terminal device group based on the non-DRX mode and the destination layer 2 address.

Alternatively, the at least two V2X services include the first V2X service and a second V2X service, where the transmission configuration of the first V2X service is the DRX mode, a transmission configuration of the second V2X service is the non-DRX mode, and a priority of the first V2X service is higher than a priority of the second V2X service. A V2X layer of the first terminal device sends the DRX mode, the priority of the first V2X service, the non-DRX mode, the priority corresponding to the second V2X service, and the same destination layer 2 address corresponding to the at least two V2X services to the AS layer of the first terminal device. The AS layer of the first terminal device determines whether to enable the DRX mechanism. For example, the AS layer sends the at least two V2X services to the second terminal device or the terminal device group based on the DRX mode and the destination layer 2 address.

In this way, the AS layer may determine whether to enable the DRX mechanism.

In a possible design, the priority of the second V2X service is lower than the priority of the first V2X service. The AS layer or the V2X layer of the first terminal device rejects the second V2X service.

In this way, the QoS requirement of the V2X service with the high priority can be ensured as much as possible.

According to a sixth aspect, a communication method is provided. The method may be performed by a terminal device of a receiver, or may be performed by a chip in a terminal device of a receiver.

An example in which the method is performed by a second terminal device is used. The method includes: The second terminal device determines a transmission configuration of a first V2X service in at least two V2X services, where the first V2X service is a V2X service with a highest priority in the at least two V2X services. If the transmission configuration of the first V2X service is a DRX mode, the second terminal device receives the at least two V2X services from a first terminal device based on the DRX mode. Alternatively, if the transmission configuration of the first V2X service is a non-DRX mode, the second terminal device receives the at least two V2X services from a first terminal device based on the non-DRX mode. Transmitters of the at least two V2X services are all the second terminal device or a terminal device group to which the second terminal device belongs.

In a possible design, the at least two V2X services correspond to a same destination layer 2 address.

In a possible design, the transmission configuration of the first V2X service in the at least two V2X services is the non-DRX mode. A V2X layer of the second terminal device sends second indication information or sends no third indication information to an AS layer of the second terminal device, where the second indication information indicates the AS layer of the second terminal device not to enable a DRX mechanism, and the third indication information indicates the AS layer of the second terminal device to enable the DRX mechanism. Alternatively, the transmission configuration of the first V2X service in the at least two V2X services is the DRX mode. A V2X layer of the second terminal device sends third indication information or sends no second indication information to an AS layer of the second terminal device, where the second indication information indicates the AS layer of the second terminal device not to enable a DRX mechanism, and the third indication information indicates the AS layer of the second terminal device to enable the DRX mechanism.

In a possible design, the at least two V2X services include the first V2X service and a second V2X service, where the transmission configuration of the first V2X service is the non-DRX mode, a transmission configuration of the second V2X service is the DRX mode, and a priority of the first V2X service is higher than a priority of the second V2X service. A V2X layer of the second terminal device sends the non-DRX mode, the priority of the first V2X service, the DRX mode, the priority corresponding to the second V2X service, and the same destination layer 2 address corresponding to the at least two V2X services to the AS layer of the second terminal device. The AS layer of the second terminal device receives the at least two V2X services from the first terminal device based on the non-DRX mode and the destination layer 2 address.

Alternatively, the at least two V2X services include the first V2X service and a second V2X service, where the transmission configuration of the first V2X service is the DRX mode, a transmission configuration of the second V2X service is the non-DRX mode, and a priority of the first V2X service is higher than a priority of the second V2X service. A V2X layer of the second terminal device sends the DRX mode, the priority of the first V2X service, the non-DRX mode, the priority corresponding to the second V2X service, and the same destination layer 2 address corresponding to the at least two V2X services to the AS layer of the second terminal device. The AS layer of the second terminal device determines whether to enable the DRX mechanism. For example, the AS layer receives the at least two V2X services from the first terminal device based on the DRX mode and the destination layer 2 address.

In a possible design, the priority of the second V2X service is lower than the priority of the first V2X service. The AS layer or the V2X layer of the second terminal device rejects the second V2X service.

For technical effects of the foregoing designs, refer to technical effects of corresponding designs in the fifth aspect. Details are not described herein again.

According to a seventh aspect, a communication apparatus is provided, including a module/unit/means for performing the method according to any one of the first aspect or the possible designs of the first aspect. The module/unit/means may be implemented by software, may be implemented by hardware, or may be implemented by hardware executing corresponding software.

For example, the apparatus may include a transceiver unit, configured to send a first V2X service based on a first layer 2 address pair. The transceiver unit is further configured to send a second V2X service based on a second layer 2 address pair. Both a destination layer 2 address in the first layer 2 address pair and a destination layer 2 address in the second layer 2 address pair correspond to a second terminal device or a terminal device group. A transmission configuration of the first V2X service is a DRX mode, and a transmission configuration of the second V2X service is a non-DRX mode; or a transmission configuration of the first V2X service is a non-DRX mode, and a transmission configuration of the second V2X service is a DRX mode.

In a possible design, the apparatus further includes a processing unit, configured to obtain the first layer 2 address pair based on the transmission configuration of the first V2X service, and obtain the second layer 2 address pair based on the transmission configuration of the second V2X service.

In a possible design, the transmission configuration of the first V2X service is the DRX mode. The transceiver unit is further configured to send the first V2X service based on a DRX parameter corresponding to the DRX mode.

In a possible design, both the destination layer 2 address in the first layer 2 address pair and the destination layer 2 address in the second layer 2 address pair correspond to the second terminal device. The processing unit includes a V2X layer module and an AS layer module.

The V2X layer module is configured to determine the first layer 2 address pair after the first V2X service is triggered.

The AS layer module is configured to send, based on the first layer 2 address pair, capability information of a first terminal device to which the apparatus belongs to the second terminal device, and/or receive capability information from the second terminal device, where the capability information of the first terminal device and/or the capability information of the second terminal device may be used for determining that communication between the first terminal device and the second terminal device may be performed by using different layer 2 address pairs that are for sending V2X services with different transmission configurations; and send first indication information to the V2X layer module, where the first indication information indicates that the communication between the first terminal device and the second terminal device may be performed the by using different layer 2 address pairs that are for sending the V2X services with different transmission configurations.

The V2X layer module is further configured to determine, based on the first indication information, the second layer 2 address pair after the second V2X service is triggered.

In a possible design, both the destination layer 2 address in the first layer 2 address pair and the destination layer 2 address in the second layer 2 address pair correspond to the terminal device group. Both the first V2X service and the second V2X service are groupcast services of the terminal device group (that is, a groupcast scenario). The processing unit includes an App layer module and the V2X layer module.

The App layer module is configured to: after the groupcast service is triggered, determine a first App layer group identifier based on the transmission configuration of the first V2X service and determine a second App layer group identifier based on the transmission configuration of the second V2X service; and send the first App layer group identifier and the second App layer group identifier to the V2X layer module.

The V2X layer module is configured to determine the destination layer 2 address in the first layer 2 address pair based on the first App layer group identifier, and determine the destination layer 2 address in the second layer 2 address pair based on the second App layer group identifier.

In a possible design, the App layer module is further configured to receive the transmission configuration of the first V2X service and the transmission configuration of the second V2X service from the V2X layer module.

In a possible design, both the destination layer 2 address in the first layer 2 address pair and the destination layer 2 address in the second layer 2 address pair correspond to the terminal device group. Both the first V2X service and the second V2X service are the groupcast services of the terminal device group. The processing unit includes the App layer module and the V2X layer module.

The App layer module is configured to send an App layer group identifier corresponding to the groupcast service to the V2X layer module after the groupcast service is triggered.

The V2X layer module is configured to determine the destination layer 2 address in the first layer 2 address pair based on the App layer group identifier and the transmission configuration of the first V2X service, and determine the destination layer 2 address in the second layer 2 address pair based on the App layer group identifier and the transmission configuration of the second V2X service.

In a possible design, the processing unit is further configured to preconfigure an algorithm for converting an App layer group identifier to a destination layer 2 address. Alternatively, the transceiver unit is further configured to obtain, from a policy control function PCF network element, an algorithm for converting the App layer group identifier to a destination layer 2 address. Different transmission configurations correspond to different conversion algorithms.

According to an eighth aspect, a communication apparatus is provided, including a module/unit/means for performing the method according to any one of the second aspect or the possible designs of the second aspect. The module/unit/means may be implemented by software, may be implemented by hardware, or may be implemented by hardware executing corresponding software.

For example, the apparatus may include a transceiver unit, configured to receive, from a first terminal device, a first V2X service based on a first layer 2 address pair. The transceiver unit is further configured to receive a second V2X service based on a second layer 2 address pair from the terminal device. Both a destination layer 2 address in the first layer 2 address pair and a destination layer 2 address in the second layer 2 address pair correspond to a second terminal device or a terminal device group to which the second terminal device belongs. A transmission configuration of the first V2X service is a DRX mode, and a transmission configuration of the second V2X service is a non-DRX mode; or a transmission configuration of the first V2X service is a non-DRX mode, and a transmission configuration of the second V2X service is a DRX mode.

In a possible design, the apparatus further includes a processing unit, configured to obtain the first layer 2 address pair based on the transmission configuration of the first V2X service, and obtain the second layer 2 address pair based on the transmission configuration of the second V2X service.

In a possible design, the transmission configuration of the first V2X service is the DRX mode. The transceiver unit is further configured to receive, from the first terminal device, the first V2X service based on a DRX parameter corresponding to the DRX mode.

In a possible design, both the destination layer 2 address in the first layer 2 address pair and the destination layer 2 address in the second layer 2 address pair correspond to the second terminal device to which the apparatus belongs. The processing unit includes a V2X layer module and an AS layer module.

The V2X layer module is configured to determine the first layer 2 address pair after the first V2X service is triggered.

The AS layer module is configured to: based on the first layer 2 address pair, receive capability information of the first terminal device from the first terminal device, and/or send capability information of the second terminal device to the first terminal device, where the capability information of the first terminal device indicates that the first terminal device has a capability of simultaneously supporting a DRX mode and a non-DRX mode, and the capability information of the second terminal device indicates that the second terminal device has the capability of simultaneously supporting the DRX mode and the non-DRX mode; and send first indication information to a V2X layer module of the second terminal device, where the first indication information indicates that communication between the first terminal device and the second terminal device may be performed by using different layer 2 address pairs that are for receiving V2X services with different transmission configurations.

The V2X layer module is further configured to determine, based on the first indication information, the second layer 2 address pair after the second V2X service is triggered.

In a possible design, both the destination layer 2 address in the first layer 2 address pair and the destination layer 2 address in the second layer 2 address pair correspond to the terminal device group. Both the first V2X service and the second V2X service are groupcast services of the terminal device group. The processing unit is further configured to determine a groupcast service of interest and monitor a V2X service based on a destination layer 2 address corresponding to the groupcast service of interest.

In a possible design, the processing unit is further configured to: determine, based on the capability information of the second terminal device to which the apparatus belongs, that the communication between the first terminal device and the second terminal device may be performed by using the different layer 2 address pairs that are for receiving the V2X services with different transmission configurations; and allocate different receiving capabilities for the first V2X service and the second V2X service.

According to a ninth aspect, a communication apparatus is provided, including a module/unit/means for performing the method according to any one of the third aspect or the possible designs of the third aspect. The module/unit/means may be implemented by software, may be implemented by hardware, or may be implemented by hardware executing corresponding software.

For example, the apparatus may include: a processing unit, configured to determine that a transmission configuration of a first V2X service in at least two V2X services is a non-DRX mode, where the first V2X service is any one of the at least two V2X services; a transceiver unit, configured to send the at least two V2X services based on the non-DRX mode, where transmitters of the at least two V2X services are all a second terminal device or a terminal device group.

In a possible design, the at least two V2X services correspond to a same destination layer 2 address.

In a possible design, the processing unit includes a V2X layer module and an AS layer module. The V2X layer module is configured to: determine that the transmission configuration of the first V2X service in the at least two V2X services is the non-DRX mode; and send second indication information or send no third indication information to the AS layer module, where the second indication information indicates the AS layer module not to enable a DRX mechanism, and the third indication information indicates the AS layer module to enable the DRX mechanism.

In a possible design, the at least two V2X services include the first V2X service and a second V2X service. A transmission configuration of the second V2X service is a DRX mode. The processing unit includes the V2X layer module and the AS layer module. The V2X layer module is configured to send the non-DRX mode, the DRX mode, and the same destination layer 2 address corresponding to the at least two V2X services to the AS layer module. The AS layer module is configured to determine whether to enable the DRX mechanism, for example, determine to send the at least two V2X services to the second terminal device or the terminal device group based on the non-DRX mode and the destination layer 2 address.

According to a tenth aspect, a communication apparatus is provided, including a module/unit/means for performing the method according to any one of the fourth aspect or the possible designs of the fourth aspect. The module/unit/means may be implemented by software, may be implemented by hardware, or may be implemented by hardware executing corresponding software.

For example, the apparatus may include: a processing unit, configured to determine that a transmission configuration of a first V2X service in at least two V2X services is a non-DRX mode, where the first V2X service is any one of the at least two V2X services; and a transceiver unit, configured to receive, from a first terminal device, the at least two V2X services based on the non-DRX mode, where transmitters of the at least two V2X services are all a second terminal device to which the apparatus belongs or a terminal device group to which the second terminal device belongs.

In a possible design, the at least two V2X services correspond to a same destination layer 2 address.

In a possible design, the processing unit includes a V2X layer module and an AS layer module. The V2X layer module is configured to: determine that the transmission configuration of the first V2X service in the at least two V2X services is the non-DRX mode; and send second indication information or send no third indication information to the AS layer module, where the second indication information indicates the AS layer module not to enable a DRX mechanism, and the third indication information indicates the AS layer module to enable the DRX mechanism.

In a possible design, the at least two V2X services include the first V2X service and a second V2X service. A transmission configuration of the second V2X service is a DRX mode. The processing unit includes the V2X layer module and the AS layer module. The V2X layer module is configured to send the non-DRX mode, the DRX mode, and the same destination layer 2 address corresponding to the at least two V2X services to the AS layer module. The AS layer module is configured to determine whether to enable a DRX mechanism, for example, receive the at least two V2X services from the first terminal device based on the non-DRX mode and the destination layer 2 address.

According to an eleventh aspect, a communication apparatus is provided, including a module/unit/means for performing the method according to any one of the fifth aspect or the possible designs of the fifth aspect. The module/unit/means may be implemented by software, may be implemented by hardware, or may be implemented by hardware executing corresponding software.

For example, the apparatus may include: a processing unit, configured to determine a transmission configuration of a first V2X service in at least two V2X services, where the first V2X service is a V2X service with a highest priority in the at least two V2X services; and a transceiver unit, configured to: if the transmission configuration of the first V2X service is a DRX mode, send the at least two V2X services based on the DRX mode; or if the transmission configuration of the first V2X service is a non-DRX mode, send the at least two V2X services based on the non-DRX mode, where transmitters of the at least two V2X services are all a second terminal device or a terminal device group.

In a possible design, the at least two V2X services correspond to a same destination layer 2 address.

In a possible design, the transmission configuration of the first V2X service in the at least two V2X services is the non-DRX mode. The processing unit includes a V2X layer module and an AS layer module. The V2X layer module is configured to send second indication information or send no third indication information to the AS layer module, where the second indication information indicates the AS layer module not to enable a DRX mechanism, and the third indication information indicates the AS layer module to enable the DRX mechanism.

Alternatively, the transmission configuration of the first V2X service in the at least two V2X services is the DRX mode. The processing unit includes a V2X layer module and an AS layer module. The V2X layer module is configured to send third indication information or send no second indication information to the AS layer module, where the second indication information indicates the AS layer module not to enable a DRX mechanism, and the third indication information indicates the AS layer module to enable the DRX mechanism.

In a possible design, the at least two V2X services include the first V2X service and a second V2X service. The transmission configuration of the first V2X service is the non-DRX mode, and a transmission configuration of the second V2X service is the DRX mode. A priority of the first V2X service is higher than a priority of the second V2X service. The processing unit includes the V2X layer module and the AS layer module. The V2X layer module is configured to send the non-DRX mode, the priority of the first V2X service, the DRX mode, the priority corresponding to the second V2X service, and the same destination layer 2 address corresponding to the at least two V2X services to the AS layer module. The AS layer module is configured to send at least two V2X services to the second terminal device or the terminal device group based on the non-DRX mode and the destination layer 2 address.

Alternatively, the at least two V2X services include the first V2X service and a second V2X service. The transmission configuration of the first V2X service is the DRX mode, and a transmission configuration of the second V2X service is the non-DRX mode. A priority of the first V2X service is higher than a priority of the second V2X service. The processing unit includes the V2X layer module and the AS layer module. The V2X layer module is configured to send the DRX mode, the priority of the first V2X service, the non-DRX mode, the priority corresponding to the second V2X service, and the same destination layer 2 address corresponding to the at least two V2X services to the AS layer module. The AS layer module is configured to determine whether to enable the DRX mechanism, for example, send the at least two V2X services to the second terminal device or the terminal device group based on the DRX mode and the destination layer 2 address.

In a possible design, the priority of the second V2X service is lower than the priority of the first V2X service. The V2X layer module or the AS layer module is further configured to reject the second V2X service.

According to a twelfth aspect, a communication apparatus is provided, including a module/unit/means for performing the method according to any one of the sixth aspect or the possible designs of the sixth aspect. The module/unit/means may be implemented by software, may be implemented by hardware, or may be implemented by hardware executing corresponding software.

For example, the processing apparatus may include a processing unit, configured to determine a transmission configuration of a first V2X service in at least two V2X services, where the first V2X service is a V2X service with a highest priority in the at least two V2X services; and a transceiver unit, configured to: if the transmission configuration of the first V2X service is a DRX mode, receive the at least two V2X services from a first terminal device based on the DRX mode; or if the transmission configuration of the first V2X service is a non-DRX mode, receive the at least two V2X services from a first terminal device based on the non-DRX mode, where transmitters of the at least two V2X services are all a second terminal device to which the apparatus belongs or a terminal device group to which the second terminal device belongs.

In a possible design, the at least two V2X services correspond to a same destination layer 2 address.

In a possible design, the transmission configuration of the first V2X service in the at least two V2X services is the non-DRX mode. The processing unit includes a V2X layer module and an AS layer module. The V2X layer module is configured to send second indication information or send no third indication information to the AS layer module, where the second indication information indicates the AS layer module not to enable a DRX mechanism, and the third indication information indicates the AS layer module to enable the DRX mechanism.

Alternatively, the transmission configuration of the first V2X service in the at least two V2X services is the DRX mode. The processing unit includes a V2X layer module and an AS layer module. The V2X layer module is configured to send third indication information or send no second indication information to the AS layer module, where the second indication information indicates the AS layer module not to enable a DRX mechanism, and the third indication information indicates the AS layer module to enable the DRX mechanism.

In a possible design, the at least two V2X services include the first V2X service and a second V2X service. The transmission configuration of the first V2X service is the non-DRX mode, and a transmission configuration of the second V2X service is the DRX mode. The priority of the first V2X service is higher than a priority of the second V2X service. The processing unit includes the V2X layer module and the AS layer module. The V2X layer module is configured to send the non-DRX mode, the priority of the first V2X service, the DRX mode, the priority corresponding to the second V2X service, and the same destination layer 2 address corresponding to the at least two V2X services to the AS layer module. The AS layer module is configured to receive the at least two V2X services from the first terminal device based on the non-DRX mode and the destination layer 2 address.

Alternatively, the at least two V2X services include the first V2X service and a second V2X service. The transmission configuration of the first V2X service is the DRX mode, and a transmission configuration of the second V2X service is the non-DRX mode. The priority of the first V2X service is higher than a priority of the second V2X service. The processing unit includes the V2X layer module and the AS layer module. The V2X layer module is configured to send the DRX mode, the priority of the first V2X service, the non-DRX mode, the priority corresponding to the second V2X service, and the same destination layer 2 address corresponding to the at least two V2X services to the AS layer module. The AS layer module is configured to determine whether to enable the DRX mechanism, for example, receive the at least two V2X services from the first terminal device based on the DRX mode and the destination layer 2 address.

In a possible design, the priority of the second V2X service is lower than the priority of the first V2X service. The V2X layer module or the AS layer module is further configured to reject the second V2X service.

According to a thirteenth aspect, a communication apparatus is provided, including at least one processor and at least one interface circuit. The interface circuit is configured to receive a signal from another apparatus other than the apparatus and transmit the signal to the processor, or send a signal from the processor to another apparatus other than the apparatus. The processor is configured to implement, by using a logic circuit or executing code instructions, the method according to any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, or any one of the sixth aspect or the possible designs of the sixth aspect.

According to a fourteenth aspect, a computer-readable storage medium is provided. The storage medium stores a computer program or instructions. When the computer program or the instructions are executed by a communication apparatus, the method according to any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, or any one of the sixth aspect or the possible designs of the sixth aspect is implemented.

According to a fifteenth aspect, a computer program product is provided. The computer program product stores instructions. When the instructions are run on a computer, the computer is enabled to perform the method according to any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, or any one of the sixth aspect or the possible designs of the sixth aspect.

### BRIEF DESCRIPTION OF DRAWINGS

FIG. 1 is a diagram of an architecture of a communication system to which an embodiment of this application is applicable;
FIG. 2 is a schematic diagram of protocol layers of a terminal device;
FIG. 3 is a flowchart of a possible communication method according to an embodiment of this application;
FIG. 4 is a flowchart of a possible V2X service transmission method according to an embodiment of this application;
FIG. 5 is a detailed flowchart of a V2X service transmission method according to an embodiment of this application;
FIG. 6 is a detailed flowchart of another V2X service transmission method according to an embodiment of this application;
FIG. 7 is a flowchart of another V2X service transmission method according to an embodiment of this application;
FIG. 8 is a flowchart of another V2X service transmission method according to an embodiment of this application;
FIG. 9 is a flowchart of another possible communication method according to an embodiment of this application;
FIG. 10A is a flowchart of another V2X service transmission method according to an embodiment of this application;
FIG. 10B is a flowchart of another V2X service transmission method according to an embodiment of this application;
FIG. 11 is a flowchart of another communication method according to an embodiment of this application;
FIG. 12A is a flowchart of another V2X service transmission method according to an embodiment of this application;
FIG. 12B is a flowchart of another V2X service transmission method according to an embodiment of this application;
FIG. 13 is a schematic diagram of a structure of a communication apparatus 1300 according to an embodiment of this application;
FIG. 14 is a schematic diagram of a structure of a communication apparatus 1400 according to an embodiment of this application;
FIG. 15 is a flowchart of another V2X service transmission method according to an embodiment of this application;
FIG. 16 is a flowchart of another V2X service transmission method according to an embodiment of this application; and
FIG. 17 is a flowchart of another possible communication method according to an embodiment of this application.

### DESCRIPTION OF EMBODIMENTS

Embodiments of this application may be applied to a communication system in which terminal devices communicate with each other. For example, the communication system may be a 3rd generation partnership project (3rd Generation Partnership Project, 3GPP) communication system, specifically for example, a long term evolution (long term evolution, LTE) system, a 5th generation (5th generation, 5G) mobile communication system, a new radio (New Radio, NR) system, or another next-generation communication system, or may be a non-3GPP communication system. This is not limited in embodiments of this application.

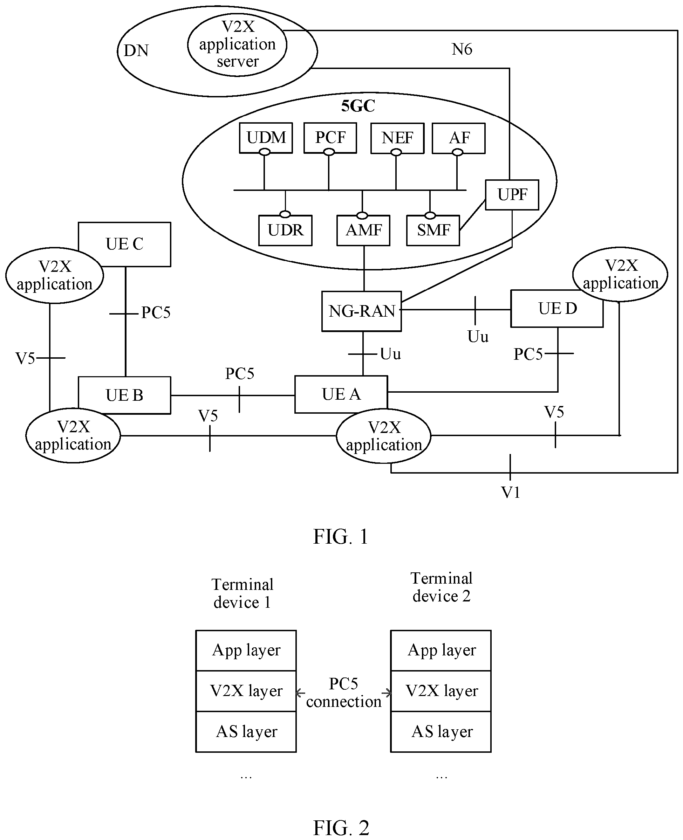

The following uses merely a communication system shown in FIG. 1 as an example to describe the communication method provided in embodiments of this application.

As shown in FIG. 1, a diagram of an architecture of the communication system is provided. The communication system may include a plurality of terminal devices, a plurality of access network (RAN or NG-RAN) devices, and a plurality of network elements (or network function entities) such as an access and mobility management function (Access and Mobility Management Function, AMF), a policy control function (Policy Control Function, PCF), a unified data management (Unified Data Management, UDM), a session management function (Session Management Function, SMF), a user plane function (User Plane Function, UPF), a unified data repository (Unified Data Repository, UDR) function, a network exposure function (Network Exposure Function, NEF), an application function (Application Function, AF), and a data network (Data Network, DN).

The DN may include a V2X application server (Application Server, App server). In FIG. 1, the terminal device may interact with a RAN device by using a Uu interface, and access a network by using the RAN device. The terminal device may further directly communicate with another terminal device through a PC5 interface. For example, the terminal device may send a V2X service to the another terminal device through the PC5 interface.

The terminal device may be referred to as terminal equipment (Terminal Equipment), user equipment (User Equipment, UE), a mobile station (Mobile Station, MS), a mobile terminal device (Mobile Terminal, MT), or the like. Specifically, the terminal device in FIG. 1 may be a mobile phone, a tablet computer, or a computer with a wireless transceiver function, or may be a virtual reality (Virtual Reality, VR) terminal device, an augmented reality (Augmented Reality, AR) terminal device, a wireless terminal device in industrial control, a wireless terminal device in self-driving, a wireless terminal device in telemedicine, a wireless terminal device in a smart grid, a wireless terminal device in a smart city (smart city), a wireless terminal device in a smart home, a vehicle-mounted terminal device, or the like.

The terminal device may perform one-to-one communication with another terminal device in the communication system, that is, unicast communication, or may perform groupcast or broadcast communication with a plurality of other terminal devices in the communication system. For example, a terminal device A may perform unicast communication with a terminal device B, may perform groupcast communication with a terminal device B and a terminal device C, or may perform groupcast communication with a terminal device B, a terminal device C, and a terminal device D. This is not limited in this application.

Communication between the terminal device and the terminal device may be a vehicle to everything (Vehicle to Everything, V2X) communication (in other words, the V2X service is transmitted between terminal devices) service, a proximity service (Proximity Service, ProSe) communication (in other words, the ProSe service is transmitted between terminal devices), or the like. This is not limited in this application.

For ease of description, V2X communication is used as an example in this specification.

The V2X communication includes but is not limited to vehicle to vehicle (vehicle to vehicle, V2V) communication, vehicle to pedestrian (vehicle to pedestrian, V2P) communication, pedestrian to vehicle (pedestrian to vehicle, P2V) communication, pedestrian to pedestrian (pedestrian to pedestrian, P2P) communication, vehicle to road side unit (vehicle to road side unit, V2(RSU)) communication, or the like.

Device interfaces on which the V2X communication is based include a PC5 interface and a Uu interface. In other words, some V2X services may be transmitted from one terminal device to another terminal device through a Uu interface and a V2X application server, and some V2X services may be directly transmitted between terminal devices through a PC5 interface. Communication through the Uu interface and communication through the PC5 interface may use different frequency bands and may be simultaneously performed.

For example, the communication system shown in FIG. 1 includes the following types of interfaces.
(1) V1 interface: An application layer of the terminal device may perform V2X communication with the V2X application server through the V1 interface. It should be understood that the V1 interface is a logical interface, and the terminal device actually communicates with the terminal device through a user plane path established between the terminal device and a network.
(2) PC5 interface: The PC5 interface is an interface between two terminal devices, and V2X communication is performed based on the PC5 interface.
(3) V5 interface: The V5 interface is a V2X application layer logical interface between two terminal devices, and a V2X application layer message is communicated through the logical interface.
(4) Uu interface: The Uu interface is an interface between the terminal device and the RAN device. In a base station scheduling mode (mode) 1, when the terminal device has data to be sent through a PC5 interface, the terminal device requests and obtains a corresponding PC5 communication resource from the RAN device through a Uu interface.

It should be noted that FIG. 1 is merely an example diagram of the architecture. A quantity of network elements or devices included in the communication system shown in FIG. 1 is not limited in embodiments of this application. Although not shown, in addition to the network function entities shown in FIG. 1, the network shown in FIG. 1 may further include another function entity. For example, the network may further include a monitoring module, configured to monitor a working status of each device in the network.

In addition, names of devices in FIG. 1 and names of interfaces between the devices are not limited. In addition to the names shown in FIG. 1, each device may alternatively be named differently. For example, a name of each device is replaced with a name of a network element that has a same or similar function. This is not limited.

Further, to support direct communication between terminal devices, two terminal devices in direct communication may establish protocol layers shown in FIG. 2, and transmit a V2X service through the protocol layer.

As shown in FIG. 2, two terminal devices (for example, a terminal device 1 and a terminal device 2) in direct communication each include an application layer (application layer, App layer), a V2X layer (V2X layer), and an access stratum (access stratum, AS) layer. The application layer is mainly for providing a V2X service, for example, generating or triggering the V2X service. The V2X layer is mainly responsible for establishing a PC5 link and the like. The AS layer is mainly for filtering the V2X service into a corresponding quality of service (Quality of Service, QoS) flow (flow).

Certainly, the terminal device may further include other layers, for example, a link (Media Access Control, MAC) layer and a physical (PHYSICAL, PHY) layer. This is not limited in this application.

In addition, a name of each protocol layer in FIG. 2 is not limited. In addition to the names shown in FIG. 2, each protocol layer may alternatively be named differently. For example, the name of each protocol layer is replaced with a name of a protocol layer that has a same or similar function (for example, in a ProSe scenario, the V2X layer may be replaced with a ProSe layer). This is not limited in this application.

In PC5 communication, a sidelink (Sidelink, SL) discontinuous reception (Discontinuous Reception, DRX) mechanism is introduced to control the terminal device to monitor a communication message on a corresponding radio resource. A terminal device that enables the SL DRX mechanism does not need to constantly or does not need to continuously monitor a communication message on a corresponding radio resource. For example, DRX may include monitoring duration and sleep duration. A transmitting terminal device monitors, only in the monitoring duration, whether a communication message exists on a corresponding radio resource; and, in the sleep duration, does not perform monitoring, and enters sleep to reduce power consumption of the terminal device while it is ensured that data can be effectively transmitted. However, a terminal device that does not enable (or disable) the SL DRX mechanism needs to constantly or continuously monitor a communication message on a radio resource.

In the PC5 communication, regardless of a mode 1 (which is a mode in which a base station schedules a PC5 communication resource for PC5 communication of the terminal device) scenario and a mode 2 (which is a mode in which in a preconfigured PC5 resource, a transmitting terminal device (Tx UE) contends for a PC5 communication resource, and the base station does not need to schedule the PC5 communication resource in real time) scenario, for communication between the transmitting terminal device (Tx UE) and a receiving terminal device (Rx UE), when the Tx UE has data to be sent to the Rx UE, the transmit Tx UE determines whether to enable the SL DRX mechanism. If the SL DRX mechanism is enabled, an SL DRX parameter is further determined. Specifically: 1. An AS layer of the Tx UE determines, based on a transmission configuration (Tx profile) obtained from a V2X layer, whether to enable the SL DRX mechanism. 2. A PC5 QoS parameter determines the SLDRX parameter.

In Uu communication, there is also a DRX mechanism, for example, connected-discontinuous reception (Connected-Discontinuous Reception, C-DRX). The RAN device may determine, based on a QoS parameter of a session established for a current service of the terminal device, whether to enable a C-DRX mechanism and set a C-DRX parameter, and send the C-DRX parameter to the terminal device via an RRC configuration message.

However, it is different from the Uu communication in which the terminal device establishes only one Uu/radio resource control (Radio Resource Control, RRC) connection to the RAN device that, in PC5 communication, the terminal device may communicate with a plurality of terminal devices through a PC5 interface, or may establish a plurality of PC5 unicast links with another terminal device for communication. Therefore, if DRX is in one-to-one correspondence with a target layer 2 (L2) address, considering that some V2X services correspond to a DRX configuration (DRX profile, where the DRX mechanism can be enabled), and some V2X services correspond to a non-DRX profile (non-DRX profile, where the DRX mechanism cannot be enabled), a case in which a plurality of services may correspond to one layer 2 address needs to be considered. In other words, when a V2X service that corresponds to both the DRX profile and the non-DRX profile exists, the terminal device enables the SL DRX mechanism or does not enable the SL DRX mechanism.

For example, 1. For broadcast (Broadcast), different types of services correspond to different L2 addresses, and the Tx UE sends data based on an L2 address corresponding to a service type. Therefore, the foregoing problem does not exist. If a plurality of different types of services correspond to a same L2 address, the foregoing problem exists. 2. For groupcast (Groupcast), because all services belonging to the groupcast group use a unique destination group L2 address, the foregoing problem exists. 3. In terms of unicast, because all services belonging to the unicast use a unique destination L2 address, the foregoing problem also exists.

In addition, in terms of groupcast, in a possible case, the application layer of the terminal device indicates, only as needed, a sent or received V2X service type (V2X service type) (for example, a type of a V2X service that the terminal device is interested in sending or receiving) to the V2X layer, and the AS layer of the terminal device needs to determine, based on a Tx profile received from a high layer, whether to enable the SL DRX mechanism. However, because different group members (Group members) are interested in different services, among different members in a same group, some members enable the SL DRX mechanism and some members do not enable the SLDRX mechanism. As a result, a group member receives no groupcast content or can receive only a part of groupcast content. Therefore, in this case, the SL DRX mechanism cannot be used or an effect of use of the SL DRX mechanism is poor.

To resolve one or more of the foregoing technical problems, technical solutions in embodiments of this application are provided. A method for enabling or disabling the SL DRX mechanism in a PC5 communication scenario is provided in embodiments of this application. The SL DRX mechanism can be enabled for some services, to effectively save power of a terminal device, and the SL DRX mechanism can be disabled for some services, to meet a QoS requirement of the services.

The following describes in detail the technical solutions provided in embodiments of this application by using the scenario shown in FIG. 1 as an example, and specifically using a V2X service transmission scenario as an example.

For ease of description, SL DRX is abbreviated as DRX in the following descriptions. In other words, unless otherwise specified, DRX in the following refers to SL DRX.

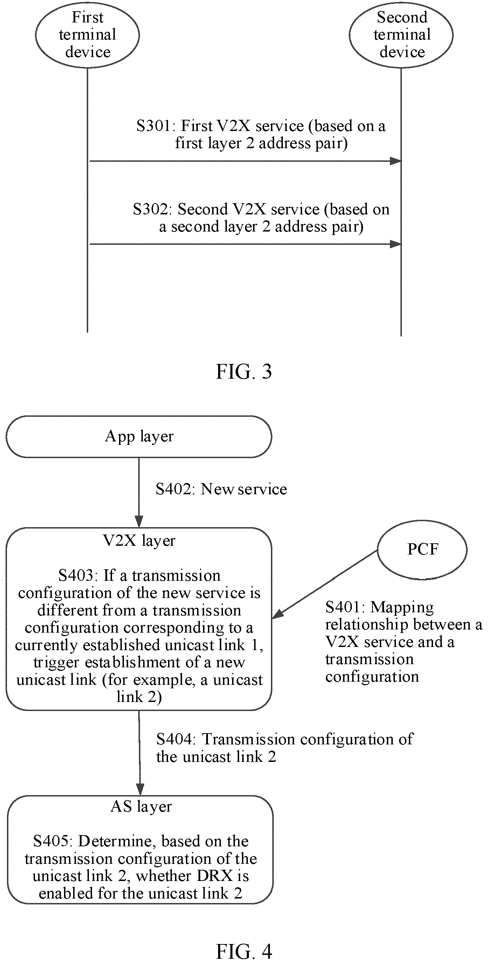

FIG. 3 is a flowchart of a communication method according to an embodiment of this application. The method includes the following steps.

S301: A first terminal device sends a first V2X service based on a first layer 2 address pair, and correspondingly, a second terminal device receives the first V2X service from the first terminal device based on the first layer 2 address pair.

S302: The first terminal device sends a second V2X service based on a second layer 2 address pair, and correspondingly, the second terminal device receives the second V2X service from the first terminal device based on the second layer 2 address pair.

It should be understood that a sequence of step S301 and step S302 is not limited in this application. To be specific, step S301 may be performed before step S302, step S302 may be performed before step S301, or step S301 and step S302 may be simultaneously performed.

In this embodiment of this application, a transmission configuration of the first V2X service is different from a transmission configuration of the second V2X service.

A transmission configuration includes a configuration of a requirement (or demand) of a V2X service for enabling a DRX mechanism. The requirement includes two types: enabling the DRX mechanism and disabling the DRX mechanism. For example, the transmission configuration may include two types: a DRX mode and a non-DRX (non-DRX) mode. The DRX mechanism needs to be enabled for a V2X service whose transmission configuration is the DRX mode. The DRX mechanism does not need to be enabled or needs to be disabled for a V2X service whose transmission configuration is the non-DRX mode.

When a transmission configuration of a specific V2X service is the DRX mode, it indicates that the terminal device needs to transmit the V2X service in the DRX mode. In other words, a transmitting terminal device needs to send data in the DRX mode, and a receiving terminal device needs to receive the data in the DRX mode. When a transmission configuration of a specific V2X service is the non-DRX mode, it indicates that the terminal device does not need to transmit the V2X service in the DRX mode. In other words, a transmitting terminal device does not need to send data in the DRX mode (in other words, the data may be continuously sent), and a receiving terminal device does not need to receive the data in the DRX mode (in other words, the data may be continuously monitored).

Correspondingly, that a transmission configuration of the first V2X service is different from a transmission configuration of the second V2X service may include the following two cases: The transmission configuration of the first V2X service is the DRX mode, and the transmission configuration of the second V2X service is the non-DRX mode; or the transmission configuration of the first V2X service is the non-DRX mode, and the transmission configuration of the second V2X service is the DRX mode.

Optionally, when a transmission configuration of a specific V2X service is the DRX mode, a transmitter of the V2X service sends the V2X service through a DRX parameter corresponding to the DRX mode. For example, if the transmission configuration of the first V2X service is the DRX mode, the first terminal device sends the first V2X service based on the DRX parameter corresponding to the DRX mode. Correspondingly, the second terminal device receives the first V2X service from the first terminal device based on the DRX parameter corresponding to the DRX mode. The DRX parameter includes but is not limited to a timing duration of a DRX-related timer, a DRX cycle duration, and the like. This is not limited in this application.

It may be understood that in actual application, the transmission configuration may alternatively be named differently. This is not limited in this application. For example, the transmission configuration may alternatively be named as a transmit configuration (Tx profile), a receive configuration (Rx profile), or the like.

Optionally, the transmission configuration may be specifically one piece of information, and a value of the information includes two types: DRX and non-DRX.

In a possible design, before sending the first V2X service based on the first layer 2 address pair, the first terminal device further needs to determine the first layer 2 address pair. Before sending the second V2X service based on the second layer 2 address pair, the first terminal device further needs to obtain the second layer 2 address pair. Specifically, the first terminal device may obtain the first layer 2 address pair based on the transmission configuration of the first V2X service, and obtain the second layer 2 address pair based on the transmission configuration of the second V2X service. Similarly, the second terminal device may further obtain the first layer 2 address pair based on the transmission configuration of the first V2X service, and obtain the second layer 2 address pair based on the transmission configuration of the second V2X service.

In this way, different layer 2 address pairs may be allocated to V2X services with different transmission configurations.

In a possible design, the first terminal device and/or the second terminal device may obtain, from a PCF network element, a mapping relationship between the V2X service (or a service type of the V2X service) and the transmission configuration. Further, after the first V2X service is triggered, the transmission configuration corresponding to the first V2X service may be determined based on the mapping relationship, and after the second V2X service is triggered, the transmission configuration corresponding to the second V2X service may be determined based on the mapping relationship.

Optionally, if the mapping relationship does not include the transmission configuration of the first V2X service (for example, the first V2X service is a newly emerging service, and there is no corresponding transmission configuration), the first terminal device and/or the second terminal device may generate a transmission configuration of the first V2X service; and optionally, may further update the first V2X service and the transmission configuration of the first V2X service into the mapping relationship. Similarly, if the mapping relationship does not include the transmission configuration of the second V2X service (for example, the second V2X service is a newly emerging service, and there is no corresponding transmission configuration), the first terminal device and/or the second terminal device may generate a transmission configuration of the second V2X service; and optionally, may further update the second V2X service and the transmission configuration of the second V2X service into the mapping relationship. During specific implementation, a V2X layer of the first terminal device and/or a V2X layer of the second terminal device may generate a new transmission configuration. Optionally, the generated transmission configuration is the non-DRX mode.

In this way, the first terminal device and/or the second terminal device may determine a transmission configuration corresponding to each V2X service, to further provide support in determining a layer 2 address pair of the V2X service.

In addition, the mapping relationship between the V2X service and the transmission configuration may alternatively be stored on another device. The first terminal device and/or the second terminal device obtain/obtains the mapping relationship from the another device. Alternatively, the mapping relationship between the V2X service and the transmission configuration may be stored locally on the first terminal device and/or the second terminal device, and the first terminal device and/or the second terminal device may directly locally obtain the mapping relationship. This is not limited in this application.

In this embodiment of this application, both a source layer 2 address in the first layer 2 address pair and a source layer 2 address in the second layer 2 address pair correspond to the first terminal device. A receiver corresponding to a destination layer 2 address in the first layer 2 address pair and a receiver corresponding to a destination layer 2 address in the second layer 2 address pair are the same. For example, both receivers correspond to the second terminal device (a unicast transmission scenario) or a terminal device group to which the second terminal device belongs (a groupcast transmission scenario).

The following describes in detail a V2X transmission solution separately in a unicast scenario and a groupcast scenario.

### 1. Unicast scenario

Both the destination layer 2 address in the first layer 2 address pair and the destination layer 2 address in the second layer 2 address pair correspond to the second terminal device. After the first V2X service is triggered, operations performed by protocol layers in the first terminal device may include:
(1) The V2X layer of the first terminal device determines the first layer 2 address pair. An access stratum AS layer of the first terminal device sends capability information of the first terminal device to a second terminal device based on the first layer 2 address pair, and/or receives capability information from the second terminal device. The capability information of the first terminal device and/or the capability information of the second terminal device may be used for determining that communication between the first terminal device and the second terminal device may be performed by using different layer 2 address pairs that are for sending the V2X services with different transmission configurations.

It may be understood that if the first terminal device bidirectionally communicates with the second terminal device, the second terminal device and the first terminal device need to provide capability information for each other. In other words, the second terminal device provides the capability information of the second terminal device for the first terminal device, and the first terminal device provides the capability information of the first terminal device for the second terminal device.

If the first terminal device unidirectionally communicates with the second terminal device, only one of the second terminal device and the first terminal device may provide capability information for the other. For example, if the first terminal device unidirectionally sends the V2X service to the second terminal device (in other words, the first terminal device does not need to receive the V2X service from the second terminal device), the second terminal device provides the capability information of the second terminal device for the first terminal device. Alternatively, if the second terminal device unidirectionally sends the V2X service to the first terminal device (in other words, the first terminal device does not need to send the V2X service to the second terminal device), the first terminal device provides the capability information of the first terminal device for the second terminal device. Certainly, in a scenario of unidirectional communication, the second terminal device and the first terminal device may also provide the capability information for each other. This is not limited in this application.

It may be understood that the capability information of the terminal device includes send (Tx) capability information and/or receive (Rx) capability information. In this embodiment of this application, an example in which the first terminal device is a transmitter and the second terminal device is a receiver is used. Therefore, the capability information of the first terminal device may include the send (Tx) capability information, and the capability information of the second terminal device may include the receive (Rx) capability information.

During specific implementation, the Tx capability information of the terminal device may specifically be whether the terminal device simultaneously supports capabilities of sending data in the DRX mode and the non-DRX mode. For example, the terminal device has at least two sending modules, and may further support one sending module in enabling the DRX mechanism and the other sending module in disabling the DRX mechanism. The Rx capability information provided by the terminal device may specifically be whether the terminal device simultaneously supports capabilities of receiving data in the DRX mode and the non-DRX mode. For example, the terminal device has at least two receiving modules, and may further support one receiving module in enabling the DRX mechanism and the other receiving module in disabling the DRX mechanism.

(2) The AS layer of the first terminal device sends first indication information to the V2X layer of the first terminal device, where the first indication information indicates that the communication between the first terminal device and the second terminal device may be performed by using different layer 2 address pairs that are for sending the V2X services with different transmission configurations. In other words, the first indication information may trigger/activate the V2X layer of the first terminal device to enable a function of sending the V2X services with different transmission configurations through the different layer 2 address pairs.

(3) After the second V2X service is triggered, the V2X layer of the first terminal device determines the second layer 2 address pair based on the first indication information.

Optionally, if the communication between the first terminal device and the second terminal device does not support sending of the V2X services with different transmission configurations through the different layer 2 address pairs, the AS layer of the first terminal device does not send the first indication information to the V2X layer of the first terminal device (in other words, if the V2X layer of the first terminal device does not receive the first indication information, it is determined that the communication between the first terminal device and the second terminal device does not support the sending of the V2X services with different transmission configurations through the different layer 2 address pairs), or sends other indication information to the V2X layer of the first terminal device for indicating that the communication between the first terminal device and the second terminal device does not support the sending of the V2X services with different transmission configurations through the different layer 2 address pairs. This is not limited in this application. The following uses an example in which if the communication between the first terminal device and the second terminal device does not support the sending of the V2X services with different transmission configurations through different layer 2 address pairs, the AS layer of the first terminal device does not send the first indication information to the V2X layer of the first terminal device.

FIG. 4 is a flowchart of a possible V2X service transmission method according to an embodiment of this application. The method includes the following steps.

S401: A terminal device requests a V2X configuration parameter from a PCF network element, where the V2X configuration parameter includes a mapping relationship between a V2X service and a transmission configuration (for example, a Tx profile).

It may be understood that the terminal device herein may be a transmitter, for example, a first terminal device, or may be a receiver, for example, a second terminal device. This is not limited in this application.

S402: An App layer of the terminal device triggers a new service.

S403: A V2X layer of the terminal device obtains a value, that is, DRX or non-DRX, of a Tx profile corresponding to the new service. When the application layer triggers a service, V2X determines that if the value (the DRX or the non-DRX) of the Tx profile of the new service is different from that of a currently established unicast link (for example, a unicast link 1), a new unicast link (for example, a unicast link 2) is triggered to be established.

S404: The V2X layer of the terminal device sends a Tx profile of the unicast link 2 to the AS layer of the terminal device.

S405: The AS layer of the terminal device determines, based on the Tx profile of the unicast link 2, whether the DRX is enabled for the unicast link 2.

In a possible implementation, the AS layer of the terminal device may send first indication information, a Tx capability/an Rx capability, and the like corresponding to the unicast link to the V2X layer of the terminal device, to assist the V2X layer of the terminal device in determining, based on the mapping relationship between the V2X service and the transmission configuration (for example, the Tx profile), whether to send the service through the established unicast link or the newly established unicast link.

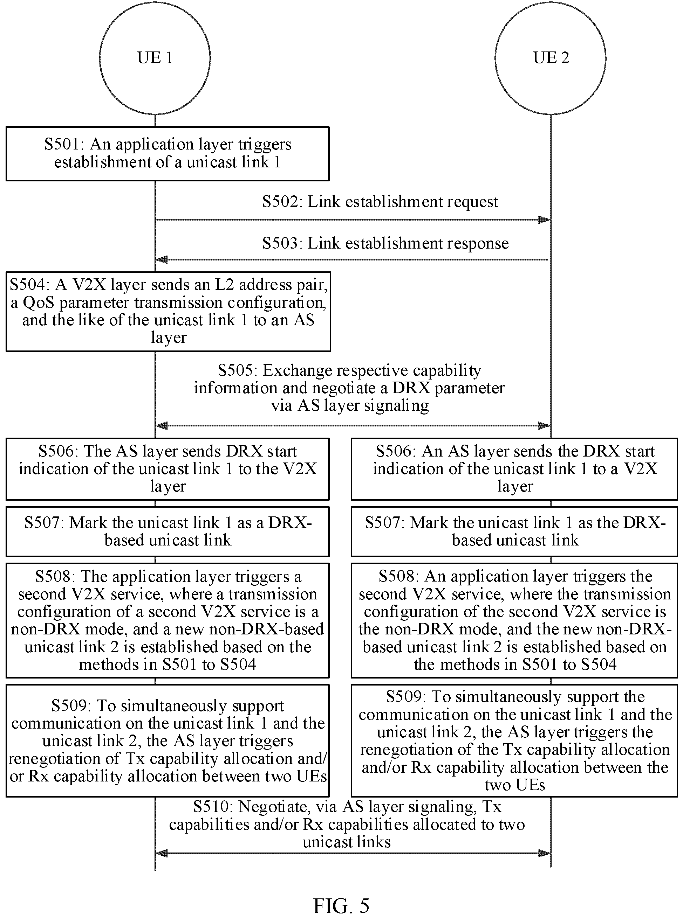

For example, an example in which a transmission configuration of a first V2X service is a DRX mode and a transmission configuration of a second V2X service is a non-DRX mode is used. FIG. 5 is a detailed flowchart of a V2X service transmission method according to an embodiment of this application. The method includes the following steps.

S501: An application layer of a first terminal device (represented by UE 1) triggers the first V2X service (whose transmission configuration is the DRX mode), and a V2X layer obtains a service requirement (for example, QoS information) of the first V2X service and triggers establishment of a unicast link 1 with UE 2.

S502: The UE 1 sends a link establishment request to the UE 2.

The request may carry information allocated by the UE 1 to the unicast link, for example, a layer 2 address (as a source address in a layer 2 address pair corresponding to the unicast link) and a service type of the first V2X service.

S503: The UE 2 returns a link establishment response to the UE 1.

The response may carry a layer 2 address (as a destination address in a layer 2 address pair corresponding to the unicast link) allocated by the UE 2 to the unicast link. The unicast link 1 is successfully established.

S504: The V2X layer of the UE 1 sends an L2 address pair, a QoS parameter, and a Tx profile of the unicast link 1 to an AS layer of the UE 1.

The L2 address pair includes one source L2 address and one destination L2 address. In this embodiment of this application, an example in which the UE 1 sends a V2X service to the UE 2 is used. Therefore, a layer 2 address of the UE 1 is the source L2 address, and a layer 2 address of the UE 2 is the destination L2 address.

S505: The UE 1 and the UE 2 exchange respective capability information (for example, Tx capability information of the UE 1 and Rx capability information of the UE 2) and negotiate a DRX parameter via AS layer signaling.

S506: The AS layer of the UE 1 and an AS layer of the UE 2 send a DRX enable indication (for example, first indication information) of the unicast link 1 to the V2X layer of the UE 1 and a V2X layer of the UE 2. Optionally, the Tx capability information and/or the Rx capability information may be further sent.

S507: The V2X layers of the UE 1 and the UE 2 mark the unicast link 1 as a DRX-based (DRX-based) unicast link. In this case, for a subsequent V2X service whose transmission configuration is the non-DRX mode, the V2X layers do not add the V2X service to the unicast link 1 for transmission, and establish a new non-DRX-based (non-DRX-based) unicast link; and for a subsequent V2X service whose transmission configuration is the DRX mode, the V2X layers may add the V2X service to the unicast link 1 for transmission.

S508: The application layer of the UE 1 and an application layer of the UE 2 trigger the second V2X service, the transmission configuration of the second V2X service is the non-DRX mode and is different from the transmission configuration (the DRX mode) of the first V2X service, and therefore, the V2X layers of the UE 1 and the UE 2 newly establish a non-DRX-based unicast link 2 according to a method in S501 to S504.

S509: Optionally, to simultaneously support in communicating between the unicast link 1 and the unicast link 2, the AS layers of the UE 1 and the UE 2 trigger renegotiation of Tx capability allocation and/or Rx capability allocation between the two UEs.

S510: Optionally, the UE 1 and the UE 2 negotiate, via AS layer signaling, Tx capabilities and/or Rx capabilities allocated to two unicast links (that is, the unicast link 1 and the unicast link 2), that is, a Tx capability 1 and/or an Rx capability 1 corresponding to the unicast link 1, and a Tx capability 2 and/or an Rx capability 2 corresponding to the unicast link 2. In other words, the UE 1 and the UE 2 negotiate via the AS layer signaling and respectively allocate the Tx capabilities and/or Rx capabilities corresponding to two types of unicast links (a type of the DRX-based unicast link and a type of the non-DRX-based unicast link), that is, a Tx capability 1 and/or an Rx capability 1 corresponding to the type of the DRX-based unicast link, and a Tx capability 2 and/or an Rx capability 2 corresponding to the type of the non-DRX-based unicast link.

It may be understood that the foregoing uses an example in which the DRX-based unicast link is first established. Actually, the non-DRX-based unicast link may alternatively be first established. For the subsequent V2X service whose transmission configuration is the non-DRX mode, the V2X layers may add the V2X service to the unicast link for transmission; and for the subsequent V2X service whose transmission configuration is the DRX mode, the V2X layers establish a new DRX-based unicast link.

In another possible implementation, a V2X layer of a terminal device determines, based on a mapping relationship between a V2X service and a transmission configuration (for example, a Tx profile), whether to send the service through an established unicast link or a newly established unicast link, without indication of the AS layer.

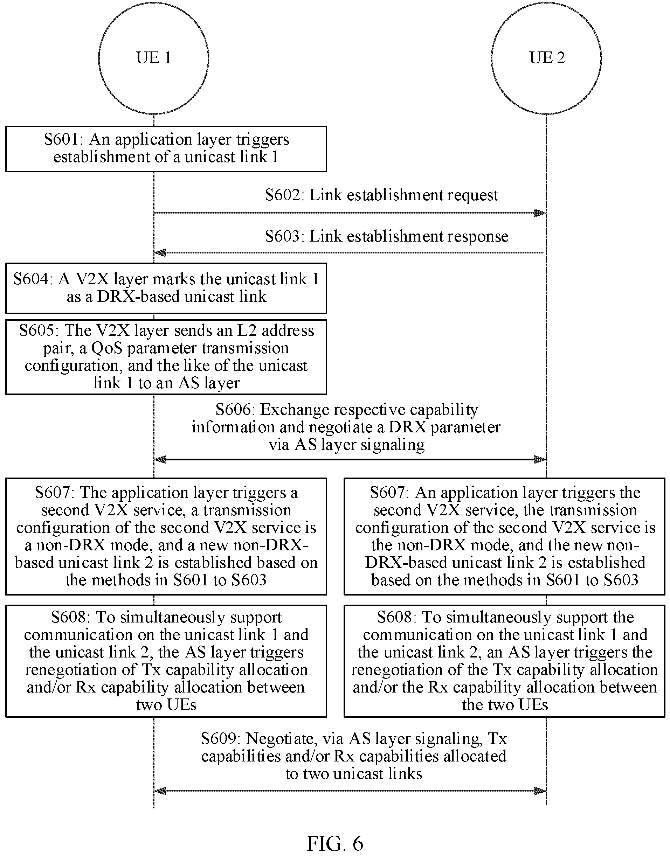

For example, an example in which a transmission configuration of a first V2X service is a DRX mode, and a transmission configuration of a second V2X service is a non-DRX mode is used. FIG. 6 is a detailed flowchart of another V2X service transmission method according to an embodiment of this application. The method includes the following steps.

S601: Application layer of UE 1 triggers the first V2X service, and V2X layers obtain a service requirement of the first V2X service and trigger establishment of a unicast link 1 between the UE 1 and the UE 2.

S602: The UE 1 sends a link establishment request to the UE 2.

S603: The UE 2 returns a link establishment response to the UE 1.

S604: The V2X layers of the UE 1 and the UE 2 mark the unicast link 1 as DRX-based.

For a subsequent V2X service whose transmission configuration is the non-DRX mode, the V2X layers do not add the V2X service to the unicast link 1 for transmission, and establish a new non-DRX-based (non-DRX-based) unicast link. For a subsequent V2X service whose transmission configuration is the DRX mode, the V2X layers may add the V2X service to the unicast link 1 for transmission.

S605: The V2X layer of the UE 1 sends an L2 address pair, a QoS parameter, and a Tx profile of the unicast link to an AS layer of the UE 1. Optionally, Tx capability information and/or Rx capability information may be further sent.

S606: The UE 1 and the UE 2 exchange respective capability information and negotiate a DRX parameter via AS layer signaling.

It may be understood that S604 may occur at any moment between S603 and S607, for example, after S605 or after S606. This is not limited in this application.

S607: The application layer of the UE 1 and an application layer of the UE 2 trigger the second V2X service, the transmission configuration of the second V2X service is the non-DRX mode, and therefore, the V2X layers of the UE 1 and the UE 2 establish a non-DRX-based unicast link 2 according to a method in S601 to S603.

S608: Optionally, to simultaneously support in communicating between the unicast link 1 and the unicast link 2, the AS layer of the UE 1 and an AS layer of the UE 2 trigger renegotiation of Tx capability allocation or Rx capability allocation between the two UEs.

S609: Optionally, the UE 1 and the UE 2 negotiate, via AS layer signaling, Tx capabilities and/or Rx capabilities allocated to the two unicast links (that is, the unicast link 1 and the unicast link 2).

A difference between the example provided in FIG. 6 and the example provided in FIG. 5 lies in that because the V2X layer has marked the unicast link 1 as DRX-based in step S604, subsequently, the AS layer does not need to send a DRX enable indication of the unicast link 1 to the V2X layer.

It should be understood that the foregoing uses the example in which the DRX-based unicast link is first established. Actually, the non-DRX-based unicast link may alternatively be first established.

In the unicast scenario, the V2X layer of the UE allocates the V2X services (even if the two V2X services have an association (for example, concurrency), a same QoS requirement, and the like) with different transmission configurations (the corresponding DRX mode and the corresponding non-DRX mode) to different destination L2 addresses for sending, to ensure that a same UE can enable DRX for some V2X services, to effectively save power of the UE, and can disable DRX for some V2X services, to meet a QoS requirement of the V2X services.

### 2. Groupcast scenario

Both a destination layer 2 address in a first layer 2 address pair and a destination layer 2 address in a second layer 2 address pair correspond to a terminal device group. Both the first V2X service and the second V2X service are groupcast services of the terminal device group. In other words, a terminal device may allocate V2X services with different transmission configurations to different destination group layer 2 addresses for sending.

In a possible design, an App layer of a first terminal device may allocate different App layer group identifiers to the V2X services with different transmission configurations in a same terminal device group. A V2X layer converts an App layer group identifier obtained from the App layer to a destination group layer 2 address. To implement that the V2X services with different transmission configurations correspond to different destination group layer 2 addresses.

For example, the application layer App layer of the first terminal device determines a first App layer group identifier based on a transmission configuration of the first V2X service, determines a second App layer group identifier based on a transmission configuration of the second V2X service, and sends the first App layer group identifier and the second App layer group identifier to a V2X layer of the first terminal device. The V2X layer of the first terminal device determines a first destination group layer 2 address based on the first App layer group identifier, where the first destination group layer 2 address is the destination layer 2 address in the first layer 2 address pair, and determines a second destination group layer 2 address based on the second App layer group identifier, where the second destination group layer 2 address is the destination layer 2 address in the second layer 2 address pair.

Optionally, the App layer of the first terminal device may further receive the transmission configuration of the first V2X service and the transmission configuration of the second V2X service from the V2X layer of the first terminal device, to assist the App layer in assigning the V2X services with different transmission configurations to different App layer group identifiers.

A receiving device, for example, any terminal device in the terminal device group, for example, a second terminal device, may determine, based on capability information of the receiving device, that communication between the receiving device and the first terminal device may be performed by using different layer 2 address pairs that are for receiving the V2X services with different transmission configurations, and may allocate different receiving capabilities for the first V2X service and the second V2X service. In addition, the second terminal device may determine a groupcast service of interest (for example, the first V2X service or the second V2X service) and monitor a V2X service based on a destination layer 2 address corresponding to the groupcast service of interest.

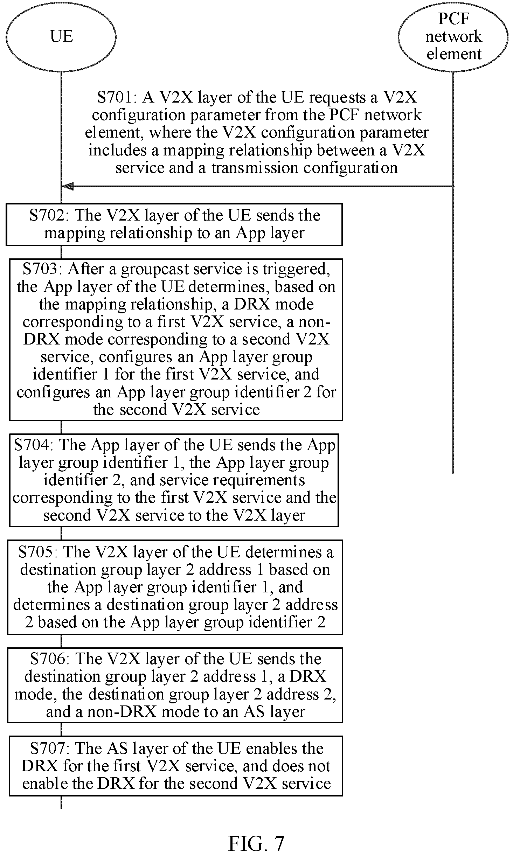

An example in which a transmission configuration of a first V2X service is a DRX mode, and a transmission configuration of a second V2X service is a non-DRX mode is used. FIG. 7 is a flowchart of another V2X service transmission method according to an embodiment of this application. The method includes the following steps.

S701: A V2X layer of UE (which may be a transmitter, for example, a first terminal device, or may be a receiver, for example, any device in a terminal device group, for example, a second terminal device) requests a V2X configuration parameter from a PCF network element, where the V2X configuration parameter includes a mapping relationship between a V2X service and a transmission configuration (for example, a Tx profile).

S702: The V2X layer of the UE sends the mapping relationship to an App layer.

S703: After a groupcast service is triggered, the App layer of the UE determines, based on the mapping relationship, that the transmission configuration corresponding to the first V2X service in the groupcast service is different from the transmission configuration corresponding to the first V2X service in the groupcast service (for example, the DRX mode corresponding to the first V2X service, and the non-DRX mode corresponding to the second V2X service), and configures different App layer group identifiers for the first V2X service and the second V2X service, for example, configures an App layer group identifier 1 for the first V2X service, and configures an App layer group identifier 2 for the second V2X service.

S704: The App layer of the UE sends the App layer group identifier 1, the App layer group identifier 2, and service requirements (for example, a service priority, a transmission rate, and a QoS parameter) corresponding to the first V2X service and the second V2X service to the V2X layer.

S705: The V2X layer of the UE determines a destination group layer 2 address 1 based on the App layer group identifier 1, and determines a destination group layer 2 address 2 based on the App layer group identifier 2.

S706: The V2X layer of the UE sends the destination group layer 2 address 1 and a transmission configuration (for example, the DRX mode) corresponding to the destination group layer 2 address 1 and a transmission configuration (for example, the non-DRX mode) corresponding to the destination group layer 2 address 2 to the AS layer.

S707: The AS layer of the UE determines, based on the transmission configuration (for example, the DRX mode) of the first V2X service, to enable DRX for the first V2X service, and transmits the first V2X service in the DRX mode based on the destination group layer 2 address 1; and determines, based on the transmission configuration (for example, the non-DRX mode) of the second V2X service, not to enable DRX for the second V2X service, and transmits the second V2X service in the non-DRX mode based on the destination group layer 2 address 2.

In addition, for a receiver device, that is, any device in the terminal device group, for example, the second terminal device, the receiver device may determine, based on Tx capability information and/or Rx capability information of the receiver device, whether to enable DRX. For example, if the second terminal device has a plurality of Tx capabilities and/or a plurality of Rx capabilities, corresponding Tx capability information and/or corresponding Rx capability information are respectively allocated to two types of groupcast services (for example, the first V2X service and the second V2X service).

In another possible design, at the App layer, various types of V2X services corresponding to a same terminal device group correspond to a same App layer group identifier. The V2X layer allocates different destination group layer 2 addresses to the V2X services with different transmission configurations, to implement that the V2X services with different transmission configurations correspond to different destination group layer 2 addresses.

For example, an App layer of the first terminal device sends an App layer group identifier corresponding to the groupcast service to a V2X layer of the first terminal device. The V2X layer of the first terminal device determines the destination group layer 2 address 1 based on the App layer group identifier and the transmission configuration (for example, the DRX mode) of the first V2X service, where the destination group layer 2 address 1 is a destination layer 2 address in a first layer 2 address pair, and determines the destination group layer 2 address 2 based on the App layer group identifier and the transmission configuration (for example, the non-DRX mode) of the second V2X service, where the destination group layer 2 address 2 is a destination layer 2 address in a second layer 2 address pair.

Optionally, the first terminal device preconfigures an algorithm for converting an App layer group identifier to a destination layer 2 address. Alternatively, the first terminal device obtains, from the policy control function PCF network element, an algorithm for converting the App layer group identifier to a destination layer 2 address. Different transmission configurations correspond to different conversion algorithms. For example, for a V2X service in the DRX mode, an App layer group is converted to a destination layer 2 address by using a conversion algorithm 1. For a V2X service in the non-DRX mode, an App layer group is converted to a destination layer 2 address by using a conversion algorithm 2.

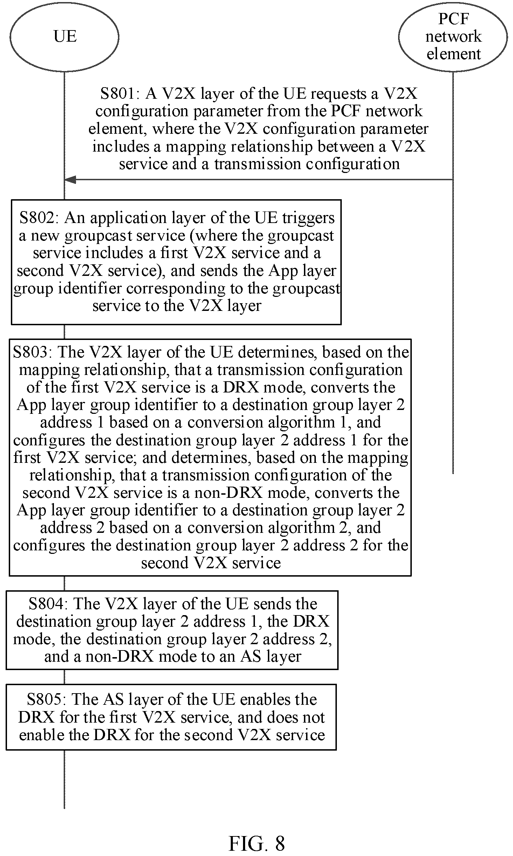

An example in which a transmission configuration of a first V2X service is a DRX mode, and a transmission configuration of a second V2X service is a non-DRX mode is used. FIG. 8 is a flowchart of another V2X service transmission method according to an embodiment of this application. The method includes the following steps.

S801: A V2X layer of UE (which may be a transmitter, for example, a first terminal device, or may be a receiver, for example, any device in a terminal device group, for example, a second terminal device) requests a V2X configuration parameter from a PCF network element, where the V2X configuration parameter includes a mapping relationship between a V2X service and a transmission configuration (for example, a Tx profile).

S802: An application layer of the UE triggers a new groupcast service (where the groupcast service includes the first V2X service and the second V2X service), and sends an App layer group identifier corresponding to the groupcast service to the V2X layer.

S803: The V2X layer of the UE determines, based on the mapping relationship, that the transmission configuration of the first V2X service is the DRX mode, converts an App layer group identifier to a destination group layer 2 address 1 based on a conversion algorithm 1, and configures the destination group layer 2 address 1 for the first V2X service; and determines, based on the mapping relationship, that the transmission configuration of the second V2X service is the non-DRX mode, converts the App layer group identifier to a destination group layer 2 address 2 based on a conversion algorithm 2, and configures the destination group layer 2 address 2 for the second V2X service.

S804: The V2X layer of the UE sends the destination group layer 2 address 1, the DRX mode, the destination group layer 2 address 2, and the non-DRX mode to an AS layer.

S805: The AS layer of the UE determines, based on the transmission configuration (for example, the DRX mode) of the first V2X service, to enable DRX for the first V2X service, and transmits the first V2X service in the DRX mode based on the destination group layer 2 address 1; and determines, based on the transmission configuration (for example, the non-DRX mode) of the second V2X service, not to enable DRX for the second V2X service, and transmits the second V2X service in the non-DRX mode based on the destination group layer 2 address 2.

In addition, the receiver, that is, the any device in the terminal device group, for example, the second terminal device, may determine, based on Tx capability information and/or Rx capability information of the receiver, whether to enable DRX. For example, if the second terminal device has a plurality of Tx capabilities and/or a plurality of Rx capabilities, corresponding Tx capability information and/or corresponding Rx capability information are respectively allocated to two types of groupcast services (for example, the first V2X service and the second V2X service).

In the groupcast scenario, the V2X layer of the UE allocates the V2X services (even if the two V2X services have an association (for example, concurrency), a same QoS requirement, and the like) with different transmission configurations (the corresponding DRX mode and the corresponding non-DRX mode) to different destination group L2 addresses for sending, to ensure that a same UE can enable DRX for some V2X groupcast services, to effectively save power of the UE, and can disable the DRX for some V2X groupcast services, to meet a QoS requirement of the V2X groupcast services.

It should be noted that the foregoing uses an example in which the first terminal device and the second terminal device transmit two V2X services, that is, the first V2X service and the second V2X service. Actually, a larger quantity of V2X services may be transmitted between the first terminal device and the second terminal device. For transmission of another V2X service, refer to the foregoing transmission methods for the first V2X service and the second V2X service. Details are not described again in this application.

The foregoing uses an example in which there is the mapping relationship between the V2X service and the transmission configuration. In actual application, there may also be a mapping relationship between a service type of the V2X service and the transmission configuration. Then, the first terminal device or the second terminal device may determine a transmission configuration of the V2X service based on the service type of the V2X service and the mapping relationship between the service type of the V2X service and the transmission configuration.

For example, a first V2X service corresponds to a first service type, and a second V2X corresponds to a second service type. The first terminal device may determine, based on a service type of the first V2X service, that a transmission configuration of the first V2X service is a non-DRX mode or a DRX mode. In addition, the first terminal device determines, based on the service type of the second V2X service, that a transmission configuration of the second V2X service is the non-DRX mode or the DRX mode.

In a possible implementation, the first terminal device may obtain configuration information, where the configuration information includes a mapping relationship between a service type and a transmission configuration. The first terminal device may query the mapping relationship. If a transmission configuration corresponding to the service type of the first V2X service exists in the mapping relationship, the first terminal device may determine the transmission configuration that is found based on the mapping relationship and that corresponds to the service type of the first V2X service, as the transmission configuration of the first V2X service. Alternatively, if no transmission configuration corresponding to the service type of the first V2X service exists in the mapping relationship, the first terminal device determines that the transmission configuration of the first V2X service is the non-DRX mode. Similarly, if a transmission configuration corresponding to the service type of the second V2X service exists in the mapping relationship, the first terminal device may determine the transmission configuration that is found based on the mapping relationship and that corresponds to the service type of the second V2X service, as the transmission configuration of the second V2X service. Alternatively, if no transmission configuration corresponding to the service type of the second V2X service exists in the mapping relationship, the first terminal device determines that the transmission configuration of the second V2X service is the non-DRX mode.

In a possible implementation, in a groupcast scenario, for example, both a destination layer 2 address in a first layer 2 address pair and a destination layer 2 address in a second layer 2 address pair correspond to a terminal device group. In addition to determining a transmission configuration of a V2X service (for example, the first V2X service and the second V2X service) that the first terminal device and/or the second terminal device are/is interested in sending or receiving, the first terminal device and/or the second terminal device may determine a transmission configuration of another V2X service in the group.

For example, the first terminal device may further query a mapping relationship for a service type of a third V2X service. If a transmission configuration corresponding to the service type of the third V2X service exists in the mapping relationship, the first terminal device may determine the transmission configuration that is found based on the mapping relationship and that corresponds to the service type of the third V2X service, as the transmission configuration of the third V2X service. Alternatively, if no transmission configuration corresponding to the service type of the third V2X service exists in the mapping relationship, the first terminal device determines that the transmission configuration of the third V2X service is the non-DRX mode. The third V2X service is a V2X service of the terminal device group, and the third V2X service is different from the first V2X service and the second V2X service.

Further, when performing V2X service transmission, the first terminal device and/or the second terminal device may consider DRX requirements of all services in the group.

In a possible example, an App layer of the first terminal device allocates a first App layer group identifier to a first App layer group, where the first App layer group includes at least one V2X service of the terminal device group, and a transmission configuration of a V2X service in the first App layer group is the same. The App layer of the first terminal device allocates a second App layer group identifier to a second App layer group, where the second App layer group includes at least one V2X service of the terminal device group, and a transmission configuration of a V2X service in the second App layer group is the same. The transmission configuration of the V2X service in the first App layer group is different from the transmission configuration of the V2X service in the second App layer group, for example, one is the DRX, and the other is the non-DRX. The first V2X service and the second V2X service respectively belong to different App layer groups.

For example, the first V2X service belongs to the first App layer group, and the second V2X service belongs to the second App layer group. Correspondingly, the first V2X service is transmitted based on the first App layer group identifier (for example, the first App layer group identifier is converted to a destination group layer 2 address 1, and the first V2X service is sent based on the destination group layer 2 address 1). The second V2X service is transmitted based on the second App layer group identifier (for example, the second App layer group identifier is converted to a destination group layer 2 address 2, and the second V2X service is sent based on the destination group layer 2 address 2).

In addition, after subsequent arrival of another service, for example, the third V2X service, the third V2X service may be directly transmitted based on the previously allocated first App layer group identifier or the previously allocated second App layer group identifier.

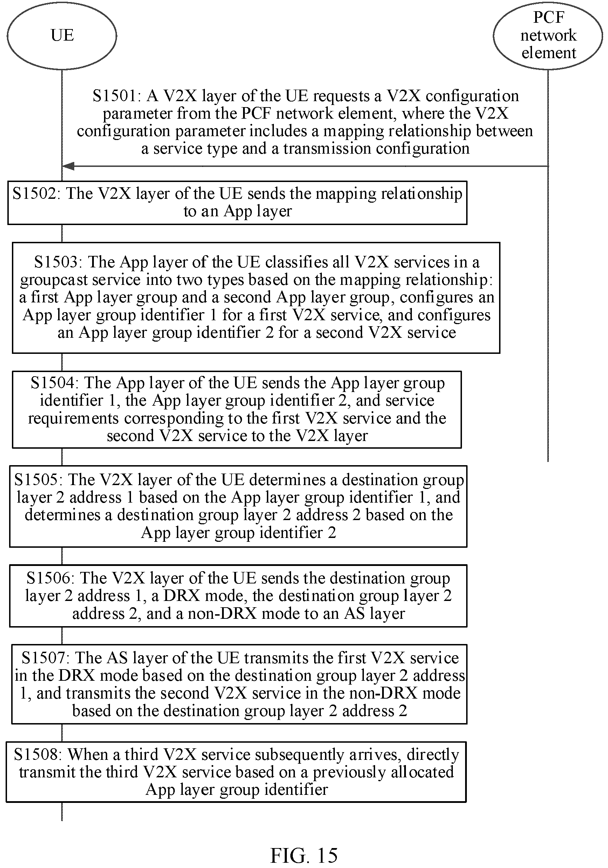

An example in which a transmission configuration of a first V2X service is a DRX mode, and a transmission configuration of a second V2X service is a non-DRX mode is used. FIG. 15 is a flowchart of another V2X service transmission method according to an embodiment of this application. The method includes the following steps.

S1501: A V2X layer of UE (which may be a transmitter, for example, a first terminal device, or may be a receiver, for example, any device in a terminal device group, for example, a second terminal device) requests a V2X configuration parameter from a PCF network element, where the V2X configuration parameter includes a mapping relationship between a service type and a transmission configuration (for example, a Tx profile).

S1502: The V2X layer of the UE sends the mapping relationship to an App layer.

S1503: The App layer of the UE classifies all V2X services in a groupcast service into two types based on the mapping relationship: a first App layer group and a second App layer group. A transmission configuration of a V2X service in the first App layer group is different from a transmission configuration of a V2X service in the second App layer group. Different App layer group identifiers are configured for the V2X service in the first App layer group and the V2X service in the second App layer group. For example, an App layer group identifier 1 is configured for the first V2X service, and an App layer group identifier 2 is configured for the second V2X service. The first V2X service belongs to the first App layer group, and the second V2X service belongs to the second App layer group. S1504: The App layer of the UE sends the App layer group identifier 1, the App layer group identifier 2, and service requirements (for example, a service priority, a transmission rate, and a QoS parameter) corresponding to the first V2X service and the second V2X service to the V2X layer.

S1505: The V2X layer of the UE determines a destination group layer 2 address 1 based on the App layer group identifier 1, and determines a destination group layer 2 address 2 based on the App layer group identifier 2.

S1506: The V2X layer of the UE sends the destination group layer 2 address 1 and a transmission configuration (for example, the DRX mode) corresponding to the destination group layer 2 address 1 and a transmission configuration (for example, the non-DRX mode) corresponding to the destination group layer 2 address 2 to an AS layer.

S1507: The AS layer of the UE transmits the first V2X service in the DRX mode based on the destination group layer 2 address 1, and transmits the second V2X service in the non-DRX mode based on the destination group layer 2 address 2.

S1508: When a third V2X service subsequently arrives, directly transmit the third V2X service based on a previously allocated App layer group identifier. For example, the App layer of the UE determines, based on a transmission configuration (for example, the DRX mode) of the third V2X service, to enable DRX for the third V2X service, and uses the third V2X service as a service of the first App layer group. In this case, the AS layer naturally transmits the third V2X service in the DRX mode based on the destination group layer 2 address 1. Alternatively, similarly, the App layer of the UE determines, based on a transmission configuration (for example, the non-DRX mode) of the third V2X service, not to enable DRX for the third V2X service, and uses the third V2X service as a service of the second App layer group. In this case, the AS layer naturally transmits the third V2X service in the non-DRX mode based on the destination group layer 2 address 2.

In another possible example, a V2X layer of the first terminal device determines, for a first V2X service group, a destination layer 2 address in a first layer 2 address pair based on a transmission configuration of a V2X service in the first V2X service group, where the first V2X service group includes at least one V2X service of the terminal device group, and the transmission configuration of the V2X service in the first V2X service group is the same. The V2X layer of the first terminal device determines, for a second V2X service group, a destination layer 2 address in a second layer 2 address pair based on a transmission configuration of a V2X service in the second V2X service group, where the second V2X service group includes at least one V2X service of the terminal device group, and the transmission configuration of the V2X service in the second V2X service group is the same. The transmission configuration of the V2X service in the first V2X service group is different from the transmission configuration of the V2X service in the second V2X service group.

The first V2X service and the second V2X service respectively belong to different V2X service groups. For example, the first V2X service belongs to the first V2X service group, and the second V2X service belongs to the second V2X service group. Correspondingly, the first V2X service is transmitted based on the first V2X service group identifier (for example, the first V2X service is sent based on the destination group layer 2 address 1). The second V2X service is transmitted based on the second V2X service group identifier (for example, the second V2X service is sent based on the destination group layer 2 address 2).

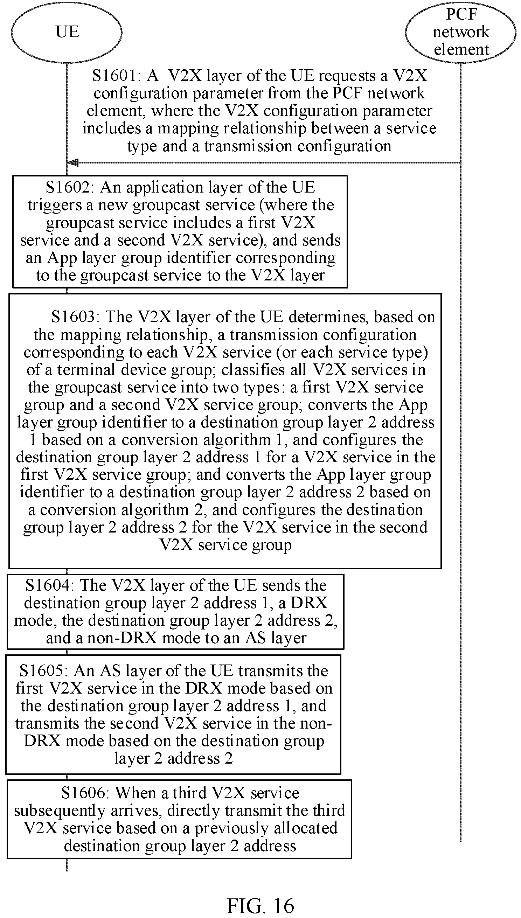

An example in which a transmission configuration of a first V2X service is a DRX mode, and a transmission configuration of a second V2X service is the non-DRX mode is used. FIG. 16 is a flowchart of another V2X service transmission method according to an embodiment of this application. The method includes the following steps.

S1601: A V2X layer of UE (which may be a transmitter, for example, a first terminal device, or may be a receiver, for example, any device in a terminal device group, for example, a second terminal device) requests a V2X configuration parameter from a PCF network element, where the V2X configuration parameter includes a mapping relationship between a service type and a transmission configuration (for example, a Tx profile).

S1602: An application layer of the UE triggers a new groupcast service (where the groupcast service includes the first V2X service and the second V2X service), and sends an App layer group identifier corresponding to the groupcast service to the V2X layer.

S1603: The V2X layer of the UE determines, based on the mapping relationship, a transmission configuration corresponding to each V2X service (or each service type) of the terminal device group; and classifies all V2X services in the groupcast service into two types: a first V2X service group and a second V2X service group, where a transmission configuration of a V2X service in the first V2X service group is different from a transmission configuration of a V2X service in the second App layer group. The App layer group identifier is converted to a destination group layer 2 address 1 based on a conversion algorithm 1, and the destination group layer 2 address 1 is configured for a V2X service in the first V2X service group. An App layer group identifier is converted to a destination group layer 2 address 2 based on a conversion algorithm 2, and the destination group layer 2 address 2 is configured for a V2X service in the second V2X service group. The first V2X service belongs to the first V2X service group, and the second V2X service belongs to the second V2X service group.

S1604: The V2X layer of the UE sends the destination group layer 2 address 1, the DRX mode, the destination group layer 2 address 2, and the non-DRX mode to an AS layer.

S1605: The AS layer of the UE transmits the first V2X service in the DRX mode based on the destination group layer 2 address 1, and transmits the second V2X service in the non-DRX mode based on the destination group layer 2 address 2

S1606: When a third V2X service subsequently arrives, directly transmit the third V2X service based on a previously allocated destination group layer 2 address. For example, the V2X layer of the UE determines, based on a transmission configuration (for example, the DRX mode) of the third V2X service, to enable DRX for the third V2X service, and uses the third V2X service as a service of the first V2X service group. In this case, the AS layer naturally transmits the third V2X service in the DRX mode based on the destination group layer 2 address 1. Alternatively, the V2X layer of the UE determines, based on a transmission configuration (for example, the non-DRX mode) of the third V2X service, not to enable DRX for the third V2X service, and uses the third V2X service as a service of the second V2X service group. In this case, the AS layer naturally transmits the third V2X service in the non-DRX mode based on the destination group layer 2 address 2.

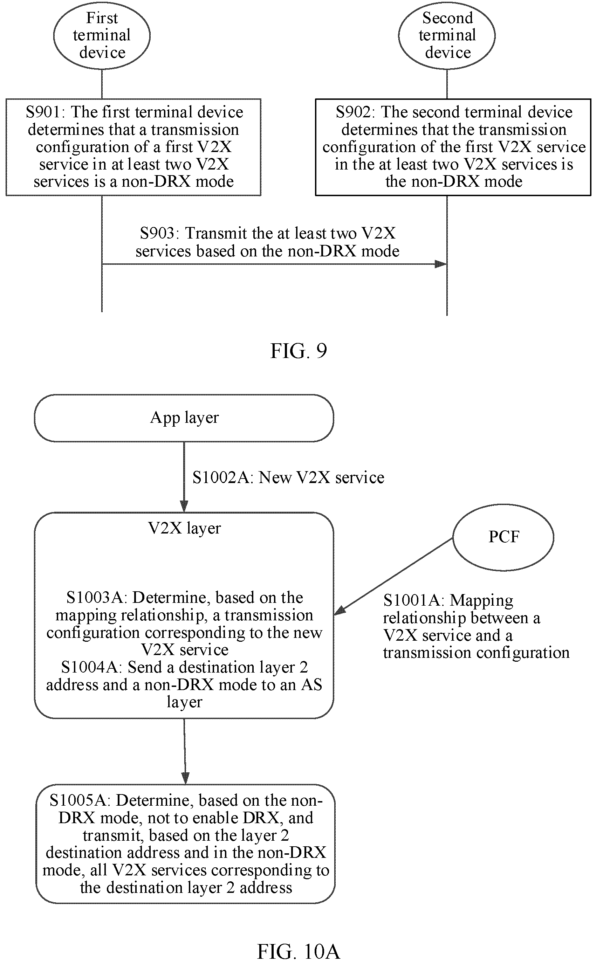

FIG. 9 is a flowchart of another communication method according to an embodiment of this application. The method includes the following steps.

S901: A first terminal device determines that a transmission configuration of a first V2X service in at least two V2X services is a non-DRX mode.

It may be understood that the first V2X service is any one of the at least two V2X services.

S902: Correspondingly, a second terminal device determines that the transmission configuration of the first V2X service in the at least two V2X services is the non-DRX mode.

It may be understood that a sequence of S901 and S902 is not limited in this application.

S903: The first terminal device sends the at least two V2X services based on the non-DRX mode; and correspondingly, the second terminal device receives the at least two V2X services from the first terminal device based on the non-DRX mode.

It may be understood that the foregoing V2X service transmission scenario may be a unicast scenario or a groupcast scenario. This is not limited in this application. Correspondingly, the at least two V2X services correspond to a same receiver. For example, the at least two V2X services correspond to the second terminal device (the unicast scenario) or a terminal device group to which the second terminal device belongs (the groupcast scenario).

In addition, for related definitions of words, for example, the transmission configuration, a DRX mode, and the non-DRX mode, refer to the foregoing related descriptions. Details are not described herein again.

In a possible design, the at least two V2X services correspond to a same destination layer 2 address. The destination layer 2 address may be a destination layer 2 address corresponding to a unicast link, or may be a destination layer 2 address corresponding to a groupcast link. This is not limited in this application.

In a possible design, the first terminal device and/or the second terminal device may obtain a mapping relationship between a V2X service (or a service type of a V2X service) and a transmission configuration from a PCF network element, and determine, based on the mapping relationship, a transmission configuration (for example, the DRX mode or the non-DRX mode) corresponding to each V2X service. In addition, the mapping relationship between the V2X service and the transmission configuration may alternatively be stored on another device. The first terminal device and/or the second terminal device obtain/obtains the mapping relationship from the another device. Alternatively, the mapping relationship between the V2X service and the transmission configuration may be stored locally on the first terminal device and/or the second terminal device, and the first terminal device and/or the second terminal device may directly locally obtain the mapping relationship. This is not limited in this application.

In a possible design, a V2X layer determines whether to enable a DRX mechanism.

For example, a V2X layer of the first terminal device determines that the transmission configuration of the first V2X service in the at least two V2X services is the non-DRX mode. The V2X layer of the first terminal device sends second indication information or sends no third indication information to an AS layer of the first terminal device, where the second indication information indicates the AS layer of the first terminal device not to enable the DRX mechanism, and the third indication information indicates the AS layer of the first terminal device to enable the DRX mechanism.

For example, a V2X layer of the second terminal device determines that the transmission configuration of the first V2X service in the at least two V2X services is the non-DRX mode. The V2X layer of the second terminal device sends the second indication information or sends no third indication information to an AS layer of the second terminal device, where the second indication information indicates the AS layer of the second terminal device not to enable the DRX mechanism, and the third indication information indicate the AS layer of the second terminal device to enable the DRX mechanism.

For example, FIG. 10A is a flowchart of another V2X service transmission method according to an embodiment of this application. The method includes the following steps.

S1001A: A V2X layer of UE (which may be a transmitter, for example, a first terminal device, or may be a receiver, for example, a second terminal device) requests a V2X configuration parameter from a PCF network element, where the V2X configuration parameter includes a mapping relationship between a V2X service and a transmission configuration.

S1002A: An application layer of the UE triggers a new V2X service.

S1003A: The V2X layer of the UE determines, based on the mapping relationship, a transmission configuration (a DRX mode or a non-DRX mode) corresponding to the new V2X service.

S1004A: If there is a V2X service in the non-DRX mode in all existing V2X services, the V2X layer sends the non-DRX mode to an AS layer, for indicating the AS layer not to enable DRX. In addition, the V2X layer of the UE further sends a destination layer 2 address to the AS layer.

S1005A: The AS layer of the UE determines, based on the non-DRX mode, not to enable DRX, and transmits, based on the layer 2 destination address and in the non-DRX mode, all V2X services corresponding to the destination layer 2 address.

In another possible design, the AS layer determines whether to enable a DRX mechanism.

For example, at least two V2X services include a first V2X service and a second V2X service. A transmission configuration of the second V2X service is the DRX mode. A V2X layer of the first terminal device sends the non-DRX mode, the DRX mode, and a same destination layer 2 address corresponding to the at least two V2X services to an AS layer of the first terminal device. The AS layer of the first terminal device determines whether to enable the DRX mechanism. For example, the AS layer sends the at least two V2X services to the second terminal device or a terminal device group based on the non-DRX mode and the destination layer 2 address.

For example, the at least two V2X services include the first V2X service and the second V2X service. The transmission configuration of the second V2X service is the DRX mode. A V2X layer of the second terminal device sends the non-DRX mode, the DRX mode, and the same destination layer 2 address corresponding to the at least two V2X services to an AS layer of the second terminal device. The AS layer of the second terminal device determines whether to enable the DRX mechanism. For example, the AS layer receives the at least two V2X services from the first terminal device based on the non-DRX mode and the destination layer 2 address.

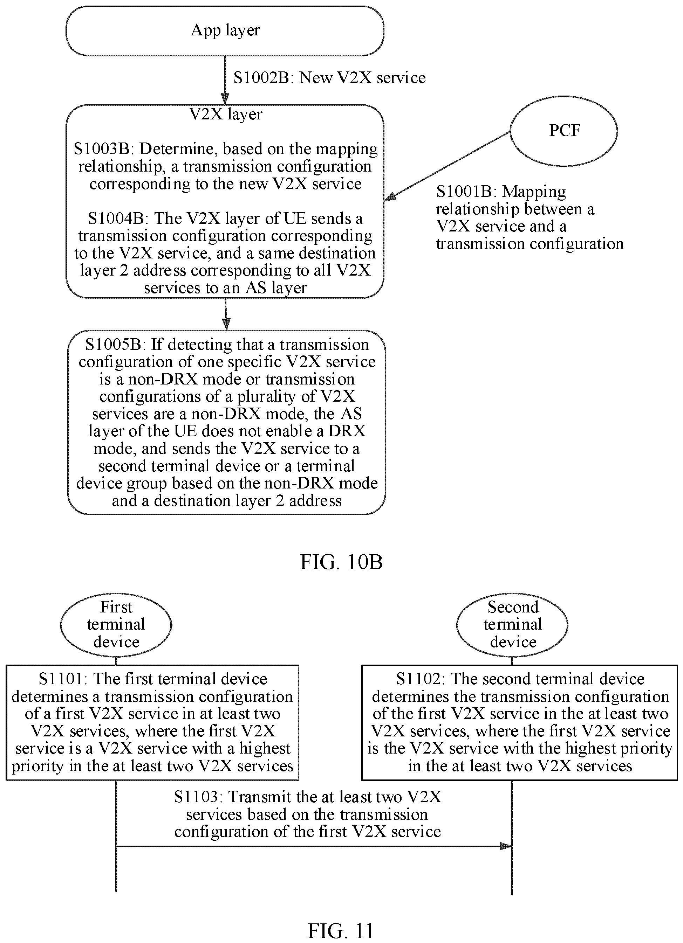

For example, FIG. 10B is a flowchart of another V2X service transmission method according to an embodiment of this application. The method includes the following steps.

S1001B: A V2X layer of UE (which may be a transmitter, for example, a first terminal device, or may be a receiver, for example, a second terminal device) requests a V2X configuration parameter from a PCF network element, where the V2X configuration parameter includes a mapping relationship between a V2X service and a transmission configuration.

S1002B: An application layer of the UE triggers a new V2X service.

S1003B: The V2X layer of the UE determines, based on the mapping relationship, a transmission configuration (a DRX mode or a non-DRX mode) corresponding to the new V2X service.

S 1004B: The V2X layer of the UE sends transmission configurations corresponding to all V2X services (including the new V2X service) and a same destination layer 2 address corresponding to all the V2X services to an AS layer.

S1005B: If detecting that a transmission configuration of one specific V2X service is the non-DRX mode or transmission configurations of a plurality of V2X services are the non-DRX mode, the AS layer of the UE does not enable the DRX mode, and sends the V2X service to the second terminal device or a terminal device group based on the non-DRX mode and the destination layer 2 address.

In the foregoing solution, provided that a destination L2 address corresponds to a V2X service in the non-DRX mode, a terminal device does not enable DRX, to ensure a QoS requirement and user service experience of the V2X service in the non-DRX mode.

The foregoing uses an example in which there is the mapping relationship between the V2X service and the transmission configuration. In actual application, there may also be a mapping relationship between a service type of the V2X service and the transmission configuration. Then, the first terminal device or the second terminal device may determine a transmission configuration of the V2X service based on the service type of the V2X service and the mapping relationship between the service type of the V2X service and the transmission configuration.

For example, a first V2X service corresponds to a first service type. The first terminal device determines, based on a service type of the first V2X service, that a transmission configuration of the first V2X service is a non-DRX mode or a DRX mode.

In a possible implementation, the first terminal device may obtain configuration information, where the configuration information includes the mapping relationship between the service type and the transmission configuration. The first terminal device may query the mapping relationship. If a transmission configuration corresponding to the service type of the first V2X service exists in the mapping relationship, the first terminal device may determine the transmission configuration that is found based on the mapping relationship and that corresponds to the service type of the first V2X service, as the transmission configuration of the first V2X service. Alternatively, if no transmission configuration corresponding to the service type of the first V2X service exists in the mapping relationship, the first terminal device determines that the transmission configuration of the first V2X service is the non-DRX mode.

In a possible implementation, in a groupcast scenario, for example, both a destination layer 2 address in a first layer 2 address pair and a destination layer 2 address in a second layer 2 address pair correspond to a terminal device group. In addition to determining a transmission configuration of a V2X service (for example, the first V2X service) that is interested in sending or receiving, the first terminal device and/or the second terminal device may determine a transmission configuration of another V2X service in the group.

For example, the first terminal device may further query a mapping relationship for a service type of a third V2X service. If a transmission configuration corresponding to the service type of the third V2X service exists in the mapping relationship, the first terminal device may determine the transmission configuration that is found based on the mapping relationship and that corresponds to the service type of the third V2X service, as the transmission configuration of the third V2X service. Alternatively, if no transmission configuration corresponding to the service type of the third V2X service exists in the mapping relationship, the first terminal device determines that the transmission configuration of the third V2X service is the non-DRX mode. The third V2X service is a V2X service of the terminal device group, and the third V2X service is different from the first V2X service.

Further, when performing V2X service transmission, the first terminal device and/or the second terminal device may consider DRX requirements of all services in the group.

In a possible example, an App layer of the first terminal device delivers a service type of each V2X service of the terminal device group to a V2X layer of the first terminal device. The V2X layer of the first terminal device obtains a transmission configuration of each V2X service, and delivers the transmission configuration (or the DRX mode and/or the non-DRX mode) of each V2X service of the terminal device group to an AS layer of the first terminal device. The AS layer of the first terminal device determines that a transmission configuration of at least one V2X service of the terminal device group is the non-DRX mode (in other words, the AS layer of the first terminal device determines that a transmission configuration of the non-DRX mode exists in the terminal device group). The AS layer of the first terminal device sends at least two V2X services to the terminal device group based on the non-DRX mode and a destination layer 2 address.

In an optional implementation, when the V2X layer of the first terminal device delivers the transmission configuration (or the DRX mode and/or the non-DRX mode) of each V2X service of the terminal device group to the AS layer of the first terminal device, if transmission configurations of a plurality of V2X services are the same, a transmission configuration of only one V2X service needs to be delivered. For example, if transmission configurations of 10 V2X services are all the DRX mode, only one piece of indication information of the DRX mode may need to be delivered. For example, if transmission configurations of the 10 V2X services are all the non-DRX mode, only one piece of indication information of the non-DRX mode may be delivered. For example, if transmission configurations of six V2X services in the 10 V2X services are the DRX mode, and transmission configurations of remaining four V2X services are the non-DRX mode, one piece of indication information of the DRX mode and one piece of indication information of the non-DRX mode may be delivered. In this way, an amount of information to be transferred can be reduced while solution reliability is ensured.

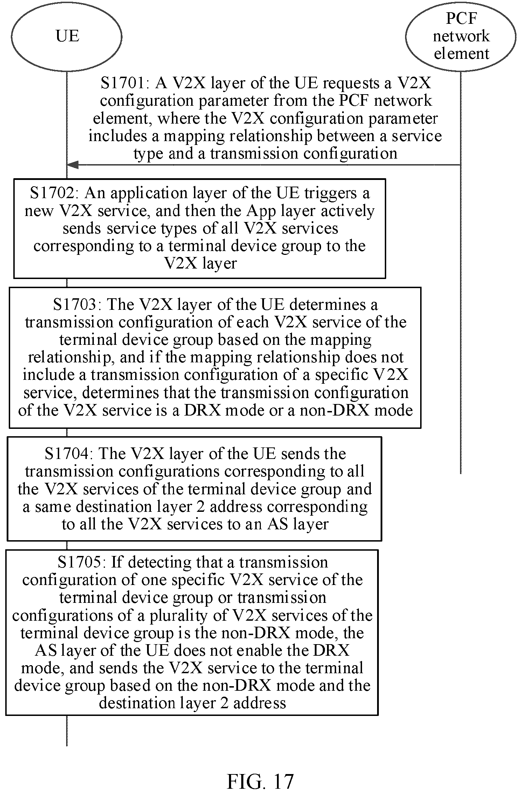

FIG. 17 is a flowchart of another V2X service transmission method according to an embodiment of this application. The method includes the following steps.

S1701: A V2X layer of UE (which may be a transmitter, for example, a first terminal device, or may be a receiver, for example, a second terminal device) requests a V2X configuration parameter from a PCF network element, where the V2X configuration parameter includes a mapping relationship between a service type and a transmission configuration.

S1702: An application layer of the UE triggers a new V2X service. The App layer actively sends, to the V2X layer, service types of all (or inherent) V2X services corresponding to a terminal device group (or service types of all (or inherent) services corresponding to a terminal device group), instead of only a service type (for example, a first V2X service) that the UE is interested in sending or receiving.

S1703: The V2X layer of the UE determines a transmission configuration of each V2X service of the terminal device group based on the mapping relationship, and if the mapping relationship does not include a transmission configuration of a specific V2X service, determines that the transmission configuration of the V2X service is a DRX mode or a non-DRX mode.

S1704: The V2X layer of the UE sends, to an AS layer, transmission configurations corresponding to all (or inherent) the V2X services (including the new V2X service) corresponding to the terminal device group and a same destination layer 2 address corresponding to all the V2X service corresponding to the terminal device.

S1705: If detecting that a transmission configuration of one specific V2X service of the terminal device group or transmission configurations of a plurality of V2X services of the terminal device group is the non-DRX mode (in other words, detecting that a transmission configuration of the non-DRX mode exists in the terminal device group), the AS layer of the UE does not enable the DRX mode, and sends the V2X service to the terminal device group based on the non-DRX mode and the destination layer 2 address.

It may be understood that the AS layer of the UE sends, based on the non-DRX mode and the destination layer 2 address, a V2X service that needs to be currently transmitted, to the second terminal device or the terminal device group. After another V2X service of the terminal device group subsequently arrives, the AS layer of the UE also sends the another V2X service to the terminal device group based on the non-DRX mode and the destination layer 2 address.

FIG. 11 is a flowchart of another communication method according to an embodiment of this application. The method includes the following steps.

S 1101: A first terminal device determines a transmission configuration of a first V2X service in at least two V2X services, where the first V2X service is a V2X service with a highest priority in the at least two V2X services.

S1102: Correspondingly, a second terminal device determines the transmission configuration of the first V2X service in the at least two V2X services, where the first V2X service is the V2X service with the highest priority in the at least two V2X services.

S1103: The first terminal device sends the at least two V2X services based on the transmission configuration of the first V2X service; and correspondingly, the second terminal device receives the at least two V2X services based on the transmission configuration of the first V2X service.

Specifically, if the transmission configuration of the first V2X service is a DRX mode, the first terminal device sends the at least two V2X services based on the DRX mode, and the second terminal device receives the at least two V2X services from the first terminal device based on the DRX mode. Alternatively, if the transmission configuration of the first V2X service is a non-DRX mode, the first terminal device sends the at least two V2X services based on the non-DRX mode, and the second terminal device receives the at least two V2X services from the first terminal device based on the non-DRX mode.

It may be understood that receivers of the at least two V2X services are the same, for example, are all the second terminal device or a terminal device group to which the second terminal device belongs.

It may be understood that the foregoing priority is related to a V2X service. In a specific application, the priority may also be related to a service type of the V2X service. For example, if a V2X service 1 corresponds to a service type 1, and the V2X service 1 corresponds to a priority 1, a V2X service type 1 corresponds to the priority 1. Alternatively, if a V2X service type 1 corresponds to a priority 1, and the V2X service type 1 corresponds to a V2X service 1, the V2X service 1 corresponds to the priority 1.

In a possible design, the at least two V2X services correspond to a same destination layer 2 address. The destination layer 2 address may be a destination layer 2 address corresponding to a unicast link, or may be a destination layer 2 address corresponding to a groupcast link. This is not limited in this application.

In a possible design, the first terminal device and/or the second terminal device may obtain a mapping relationship between the V2X service (or the service type of the V2X service) and a transmission configuration from a PCF network element, and may determine, based on the mapping relationship, a transmission configuration (for example, the DRX mode or the non-DRX mode) corresponding to each V2X service. In addition, the mapping relationship between the V2X service and the transmission configuration may alternatively be stored on another device. The first terminal device and/or the second terminal device obtain/obtains the mapping relationship from the another device. Alternatively, the mapping relationship between the V2X service and the transmission configuration may be stored locally on the first terminal device and/or the second terminal device, and the first terminal device and/or the second terminal device may directly locally obtain the mapping relationship. This is not limited in this application.

In a possible design, a V2X layer determines whether to enable a DRX mechanism.

For example, the transmission configuration of the first V2X service in the at least two V2X services is the non-DRX mode. A V2X layer of the first terminal device sends second indication information or send no third indication information to an AS layer of the first terminal device, where the second indication information indicates the AS layer of the first terminal device not to enable the DRX mechanism, and the third indication information indicates the AS layer of the first terminal device to enable the DRX mechanism. A V2X layer of the second terminal device sends second indication information or send no third indication information to an AS layer of the second terminal device, where the second indication information indicates the AS layer of the second terminal device not to enable the DRX mechanism, and the third indication information indicates the AS layer of the second terminal device to enable the DRX mechanism.

For example, the transmission configuration of the first V2X service in the at least two V2X services is the DRX mode. The V2X layer of the first terminal device sends the third indication information or send no second indication information to the AS layer of the first terminal device, where the second indication information indicates the AS layer of the first terminal device not to enable the DRX mechanism, and the third indication information indicates the AS layer of the first terminal device to enable the DRX mechanism. The V2X layer of the second terminal device sends the third indication information or send no second indication information to the AS layer of the second terminal device, where the second indication information indicates the AS layer of the second terminal device not to enable the DRX mechanism, and the third indication information indicates the AS layer of the second terminal device to enable the DRX mechanism.

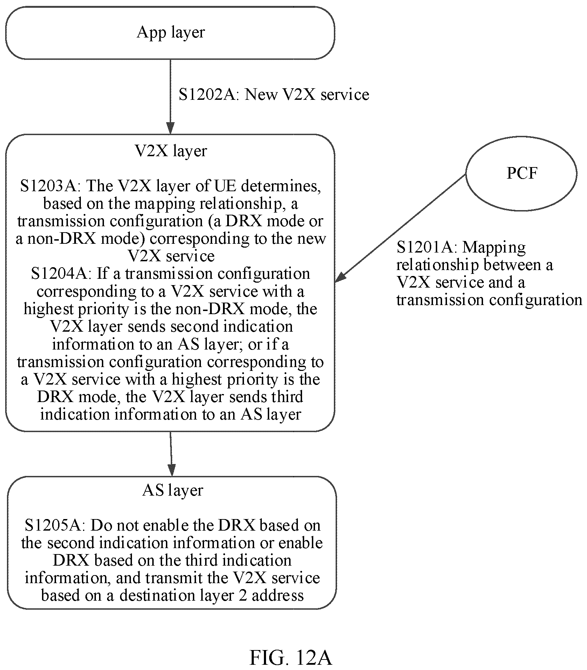

FIG. 12A is a flowchart of another V2X service transmission method according to an embodiment of this application. The method includes the following steps.

S1201A: A V2X layer of UE (which may be a transmitter, for example, a first terminal device, or may be a receiver, for example, a second terminal device) requests a V2X configuration parameter from a PCF network element, where the V2X configuration parameter includes a mapping relationship between a V2X service and a transmission configuration.

S1202A: An application layer of the UE triggers a new V2X service.

S1203A: The V2X layer of the UE determines, based on the mapping relationship, a transmission configuration (a DRX mode or a non-DRX mode) corresponding to the new V2X service.

S 1204A: If a transmission configuration corresponding to a V2X service with a highest priority is the non-DRX mode, the V2X layer of the UE sends second indication information to an AS layer; or if a transmission configuration corresponding to a V2X service with a highest priority is the DRX mode, the V2X layer of the UE sends third indication information to an AS layer.

S 1205A: The AS layer of the UE does not enable DRX based on the second indication information or enables the DRX based on the third indication information, and transmits the V2X service based on a destination layer 2 address.

In another possible design, the AS layer determines whether to enable a DRX mechanism.

For example, at least two V2X services include a first V2X service and a second V2X service. A transmission configuration of the first V2X service is the non-DRX mode, and a transmission configuration of the second V2X service is the DRX mode. A priority of the first V2X service is higher than a priority of the second V2X service. A V2X layer of the first terminal device sends the non-DRX mode, the priority of the first V2X service, the DRX mode, the priority corresponding to the second V2X service, and a same destination layer 2 address corresponding to the at least two V2X services to an AS layer of the first terminal device. The AS layer of the first terminal device determines whether to enable the DRX mechanism. For example, the AS layer sends the at least two V2X services to the second terminal device or a terminal device group based on the non-DRX mode and the destination layer 2 address. A V2X layer of the second terminal device sends the non-DRX mode, the priority of the first V2X service, the DRX mode, the priority corresponding to the second V2X service, and the same destination layer 2 address corresponding to the at least two V2X services to an AS layer of the second terminal device. The AS layer of the second terminal device determines whether to enable the DRX mechanism. For example, the AS layer receives the at least two V2X services from the first terminal device based on the non-DRX mode and the destination layer 2 address.

For example, the at least two V2X services include the first V2X service and the second V2X service. The transmission configuration of the first V2X service is the non-DRX mode, and the transmission configuration of the second V2X service is the DRX mode. The priority of the first V2X service is higher than the priority of the second V2X service. The V2X layer of the first terminal device sends the DRX mode, the priority of the first V2X service, the non-DRX mode, the priority corresponding to the second V2X service, and the same destination layer 2 address corresponding to the at least two V2X services to the AS layer of the first terminal device. The AS layer of the first terminal device sends the at least two V2X services to the second terminal device or the terminal device group based on the DRX mode and the destination layer 2 address. The V2X layer of the second terminal device sends the DRX mode, the priority of the first V2X service, the noon-DRX mode, the priority corresponding to the second V2X service, and the same destination layer 2 address corresponding to the at least two V2X services to the AS layer of the second terminal device. The AS layer of the second terminal device receives the at least two V2X services from the first terminal device based on the DRX mode and the destination layer 2 address.

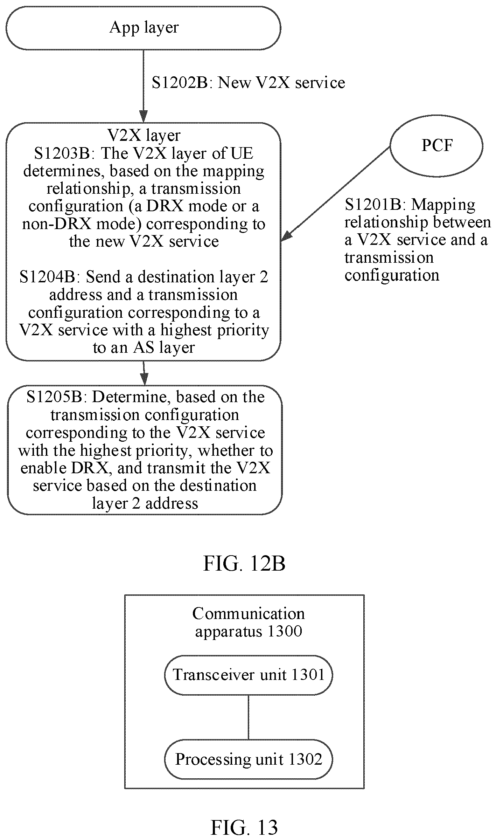

FIG. 12B is a flowchart of another V2X service transmission method according to an embodiment of this application. The method includes the following steps.

S1201B: A V2X layer of UE (which may be a transmitter, for example, a first terminal device, or may be a receiver, for example, a second terminal device) requests a V2X configuration parameter from a PCF network element, where the V2X configuration parameter includes a mapping relationship between a V2X service and a transmission configuration.

S1202B: An application layer of the UE triggers a new V2X service.

S1203B: The V2X layer of the UE determines, based on the mapping relationship, a transmission configuration (a DRX mode or a non-DRX mode) corresponding to the new V2X service.

S1204B: The V2X layer of the UE determines a transmission configuration corresponding to a V2X service with a highest priority in all existing V2X services, and sends the transmission configuration to an AS layer. In addition, the V2X layer of the UE further sends a destination layer 2 address to the AS layer.

It may be understood that if a transmission configuration corresponding to a V2X service with a high priority is the non-DRX mode, even if a transmission configuration corresponding to a V2X service with a low priority is the DRX mode, the V2X layer still sends the non-DRX mode to the AS layer, and the AS layer does not enable DRX. On the contrary, if a transmission configuration corresponding to a V2X service with a high priority is the DRX mode, even if a transmission configuration corresponding to a V2X service with a low priority is the non-DRX mode, the V2X layer still sends the DRX mode to the AS layer, and the AS layer enables the DRX.

S1205B: The AS layer of the UE determines, based on the transmission configuration corresponding to the V2X service with the highest priority, whether to enable DRX, and transmits the V2X service based on the destination layer 2 address.

In this way, a QoS requirement of the V2X service with the high priority can be ensured as much as possible.

In a possible design, the V2X layer or the AS layer may reject the V2X service with the low priority. For example, if a priority of a second V2X service is lower than a priority of a first V2X service, the V2X layer of the first terminal device or the AS layer of the first terminal device rejects the second V2X service.

In the foregoing solution, a terminal device determines, based on the transmission configuration corresponding to the V2X service with the high priority, whether to enable DRX, to ensure the QoS requirement and user service experience of the V2X service with the high priority as much as possible.

For a scenario in which a same terminal device has both a V2X service for which the DRX needs to be enabled and a V2X service for which the DRX does not need to be enabled, embodiments of this application provide the following several response solutions.
1. The terminal device allocates V2X services with different transmission configurations (a DRX modes/a non-DRX mode) to different destination group L2 addresses for transmission.
2. Provided that there is a V2X service in the non-DRX mode corresponding to a specific destination L2 address, the terminal device does not enable DRX.
3. The terminal device determines, based on a transmission configuration corresponding to a V2X service with a high priority, whether to enable DRX.

It should be noted that the several solutions may be separately implemented, or may be implemented in combination with each other.

For example, in a possible combination, the terminal device determines a transmission configuration corresponding to a V2X service with a highest priority. If there is only one V2X service with the highest priority or there are only a plurality of V2X services with the highest priority, and the plurality of V2X services correspond to a same transmission configuration (which is the DRX mode or the non-DRX mode), whether to enable DRX is determined based on the transmission configuration corresponding to the V2X service with the highest priority. If there are only a plurality of V2X services with the highest priority, and the plurality of V2X services correspond to different transmission configurations, the terminal device may allocate V2X services with different transmission configurations to different destination group L2 addresses for transmission.

Certainly, there may be another combination solution in actual application. An example is not provided in this application.

It should be understood that the solutions are used as an example in a unicast scenario and in a groupcast scenario, or may be extended to a broadcast scenario. For example, for broadcast, when a plurality of different types of services correspond to a same L2 address, a technical problem similar to that in the groupcast scenario may also be resolved based on embodiments in the groupcast scenario in this application.

The foregoing describes the methods provided in embodiments of this application with reference to the accompanying drawings. The following describes apparatuses provided in embodiments of this application with reference to the accompanying drawings.

Based on a same technical concept, an embodiment of this application provides a communication apparatus 1300. The communication apparatus 1300 includes a module/unit/means for performing the method performed by the first terminal device or the second terminal device in the foregoing method embodiments. The module/unit/means may be implemented by software, may be implemented by hardware, or may be implemented by hardware executing corresponding software. For example, refer to FIG. 13. The communication apparatus 1300 may include a transceiver unit 1301 and a processing unit 1302.

For example, when the communication apparatus is configured to implement the method performed by the first terminal device in the foregoing method embodiments:

The transceiver unit 1301 is configured to send a first V2X service based on a first layer 2 address pair, and is further configured to send a second V2X service based on a second layer 2 address pair, where both a destination layer 2 address in the first layer 2 address pair and a destination layer 2 address in the second layer 2 address pair correspond to a second terminal device or a terminal device group; and a transmission configuration of the first V2X service is a DRX mode, and a transmission configuration of the second V2X service is a non-DRX mode; or a transmission configuration of the first V2X service is a non-DRX mode, and a transmission configuration of the second V2X service is a DRX mode.

Alternatively, the processing unit 1302 is configured to determine that a transmission configuration of a first V2X service in at least two V2X services is a non-DRX mode, where the first V2X service is any one of at least two V2X services; and the transceiver unit 1301 is configured to send the at least two V2X services based on the non-DRX mode, where transmitters of the at least two V2X services are all a second terminal device or a terminal device group.

Alternatively, the transceiver unit 1301 is configured to receive, from a first terminal device, a first V2X service based on a first layer 2 address pair, and is further configured to receive a second V2X service based on a second layer 2 address pair from the first terminal device, where both a destination layer 2 address in the first layer 2 address pair and a destination layer 2 address in the second layer 2 address pair correspond to a second terminal device or a terminal device group to which the second terminal device belongs; and a transmission configuration of the first V2X service is a DRX mode, and a transmission configuration of the second V2X service is a non-DRX mode; or a transmission configuration of the first V2X service is a non-DRX mode, and a transmission configuration of the second V2X service is a DRX mode.

For example, when the communication apparatus is configured to implement the method performed by the second terminal device in the foregoing method embodiments:

The processing unit 1302 is configured to determine a transmission configuration of a first V2X service in at least two V2X services, where the first V2X service is a V2X service with a highest priority in the at least two V2X services; and the transceiver unit 1301 is configured to: if the transmission configuration of the first V2X service is a DRX mode, send the at least two V2X services based on the DRX mode; or if the transmission configuration of the first V2X service is a non-DRX mode, send the at least two V2X services based on the non-DRX mode, where transmitters of the at least two V2X services are all a second terminal device or a terminal device group.

Alternatively, the processing unit 1302 is configured to determine that a transmission configuration of a first V2X service in at least two V2X services is a non-DRX mode, where the first V2X service is any one of the at least two V2X services; and the transceiver unit 1301 is configured to receive, from a first terminal device, the at least two V2X services based on the non-DRX mode, where transmitters of the at least two V2X services are all a second terminal device to which the apparatus belongs or a terminal device group to which the second terminal device belongs.

Alternatively, the processing unit 1302 is configured to determine a transmission configuration of a first V2X service in at least two V2X services, where the first V2X service is a V2X service with a highest priority in the at least two V2X services; and the transceiver unit 1301 is configured to: if the transmission configuration of the first V2X service is a DRX mode, receive the at least two V2X services from a first terminal device based on the DRX mode; or if the transmission configuration of the first V2X service is a non-DRX mode, receive the at least two V2X services from a first terminal device based on the non-DRX mode, where transmitters of the at least two V2X services are all a second terminal device to which the apparatus belongs or a terminal device group to which the second terminal device belongs.

It should be understood that all related content of the steps in the foregoing method embodiments may be cited in function descriptions of the corresponding functional modules. Details are not described herein again.

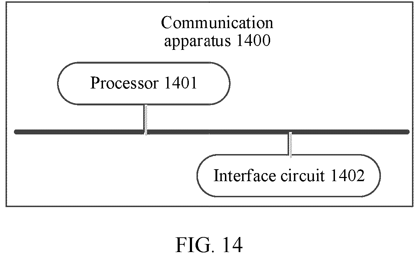

Based on a same technical concept, refer to FIG. 14. An embodiment of this application further provides a communication apparatus 1400. The apparatus 1400 includes at least one processor 1401 and at least one interface circuit 1402. The interface circuit 1402 is configured to receive a signal from an apparatus other than the apparatus 1400 and transmit the signal to the processor 1401, or send a signal from the processor 1401 to an apparatus other than the apparatus. The processor 1401 is configured to implement, by using a logic circuit or executing code instructions, the method performed by the first terminal device or the second terminal device in the foregoing method embodiments.

It should be understood that the processor mentioned in embodiments of this application may be implemented by hardware, or may be implemented by software. When the processor is implemented by using the hardware, the processor may be a logic circuit, an integrated circuit, or the like. When the processor is implemented by using the software, the processor may be a general-purpose processor, and is implemented by reading software code stored in a memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example instead of limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is the general-purpose processor, the DSP, the ASIC, the FPGA or the another programmable logic device, the discrete gate or the transistor logic device, or the discrete hardware component, the memory (a storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program runs or the instructions are on a computer, the method performed by the first terminal device or the second terminal device in the foregoing method embodiments is performed.

Based on a same technical concept, an embodiment of this application further provides a computer program product, including instructions. The computer program product stores the instructions. When the instructions are run on a computer, the method performed by the first terminal device or the second terminal device in the foregoing method embodiments is performed.

In the text descriptions of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural.

In the text descriptions of this application, the character "/" usually indicates an "or" relationship between the associated objects. In a formula in this application, the character "/" indicates a "division" relationship between the associated objects. "Including at least one of A, B, and C" may indicate that A is included, B is included, and C is included, A and B are included, A and C are included, B and C are included, and A, B, and C are included.

A person skilled in the art should understand that embodiments of this application may be provided as a method, a system, or a computer program product. Therefore, this application may use a form of hardware only embodiments, software only embodiments, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used for implementing each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

These computer program instructions may be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to this application without departing from the protection scope of this application. In this way, if these modifications and variations of this application fall within the scope of the claims and equivalent technologies thereof, this application is also intended to cover these modifications and variations.

## Claims

1. A communication method, wherein the method comprises:
sending, by a first terminal device, a first vehicle to everything V2X service based on a first layer 2 address pair; and
sending, by the first terminal device, a second V2X service based on a second layer 2 address pair, wherein
both a destination layer 2 address in the first layer 2 address pair and a destination layer 2 address in the second layer 2 address pair correspond to a second terminal device or a terminal device group; and a transmission configuration of the first V2X service is a discontinuous reception DRX mode, and a transmission configuration of the second V2X service is a non-DRX mode; or a transmission configuration of the first V2X service is a non-DRX mode, and a transmission configuration of the second V2X service is a DRX mode.

2. The method according to claim 1, wherein the method further comprises:
obtaining, by the first terminal device, the first layer 2 address pair based on the transmission configuration of the first V2X service, and obtaining the second layer 2 address pair based on the transmission configuration of the second V2X service.

3. The method according to claim 1 or 2, wherein the transmission configuration of the first V2X service is the DRX mode; and the method further comprises:
sending, by the first terminal device, the first V2X service based on a DRX parameter corresponding to the DRX mode.

4. The method according to claim 2, wherein both the destination layer 2 address in the first layer 2 address pair and the destination layer 2 address in the second layer 2 address pair correspond to the second terminal device; and
the obtaining, by the first terminal device, the first layer 2 address pair based on the transmission configuration of the first V2X service, and obtaining the second layer 2 address pair based on the transmission configuration of the second V2X service comprises:
after the first V2X service is triggered, determining, by a V2X layer of the first terminal device, the first layer 2 address pair;
sending, by an access stratum AS layer of the first terminal device, capability information of the first terminal device to the second terminal device based on the first layer 2 address pair, and/or receiving capability information of the second terminal device, wherein the capability information of the first terminal device indicates that the first terminal device has a capability of simultaneously supporting the DRX mode and the non-DRX mode, and the capability information of the second terminal device indicates that the second terminal device has a capability of simultaneously supporting the DRX mode and the non-DRX mode;
sending, by the AS layer of the first terminal device, first indication information to the V2X layer of the first terminal device, wherein the first indication information indicates that communication between the first terminal device and the second terminal device may be performed by using different layer 2 address pairs that are for sending V2X services with different transmission configurations; and
after the second V2X service is triggered, determining, by the V2X layer of the first terminal device, the second layer 2 address pair based on the first indication information.

5. The method according to claim 2, wherein both the destination layer 2 address in the first layer 2 address pair and the destination layer 2 address in the second layer 2 address pair correspond to the terminal device group, and both the first V2X service and the second V2X service are groupcast services of the terminal device group; and
the obtaining, by the first terminal device, the first layer 2 address pair based on the transmission configuration of the first V2X service, and obtaining the second layer 2 address pair based on the transmission configuration of the second V2X service comprises:
after the groupcast service is triggered, determining, by an application layer App layer of the first terminal device, a first App layer group identifier based on the transmission configuration of the first V2X service, and determining a second App layer group identifier based on the transmission configuration of the second V2X service; and sending the first App layer group identifier and the second App layer group identifier to a V2X layer of the first terminal device; and
determining, by the V2X layer of the first terminal device, the destination layer 2 address in the first layer 2 address pair based on the first App layer group identifier, and determining the destination layer 2 address in the second layer 2 address pair based on the second App layer group identifier.

6. The method according to claim 5, wherein the method further comprises:
receiving, by the App layer of the first terminal device, the transmission configuration of the first V2X service and the transmission configuration of the second V2X service from the V2X layer of the first terminal device.

7. The method according to claim 2, wherein both the destination layer 2 address in the first layer 2 address pair and the destination layer 2 address in the second layer 2 address pair correspond to the terminal device group, and both the first V2X service and the second V2X service are groupcast services of the terminal device group; and
the obtaining, by the first terminal device, the first layer 2 address pair based on the transmission configuration of the first V2X service, and obtaining the second layer 2 address pair based on the transmission configuration of the second V2X service comprises:
after the groupcast service is triggered, sending, by an App layer of the first terminal device, an App layer group identifier corresponding to the groupcast service to a V2X layer of the first terminal device; and
determining, by the V2X layer of the first terminal device, the destination layer 2 address in the first layer 2 address pair based on the App layer group identifier and the transmission configuration of the first V2X service, and determining the destination layer 2 address in the second layer 2 address pair based on the App layer group identifier and the transmission configuration of the second V2X service.

8. The method according to claim 7, wherein
the first terminal device preconfigures an algorithm for converting an App layer group identifier to a destination layer 2 address; or
the first terminal device obtains, from a policy control function PCF network element, an algorithm for converting an App layer group identifier to a destination layer 2 address.

9. The method according to claim 2, wherein the first V2X service corresponds to a first service type, and the second V2X corresponds to a second service type.

10. The method according to claim 9, further comprising:
determining, by the first terminal device based on the service type of the first V2X service, that the transmission configuration of the first V2X service is the non-DRX mode or the DRX mode; and
determining, by the first terminal device based on the service type of the second V2X service, that the transmission configuration of the second V2X service is the non-DRX mode or the DRX mode.

11. The method according to claim 10, wherein the determining, by the first terminal device based on the service type of the first V2X service, that the transmission configuration of the first V2X service is the non-DRX mode or the DRX mode comprises:
obtaining, by the first terminal device, configuration information, wherein the configuration information comprises a mapping relationship between a service type and a transmission configuration; and
determining, by the first terminal device, a transmission configuration that is found based on the mapping relationship and that corresponds to the service type of the first V2X service, as the transmission configuration of the first V2X service; or
if no transmission configuration corresponding to the service type of the first V2X service exists in the mapping relationship, determining, by the first terminal device, that the transmission configuration of the first V2X service is the non-DRX mode.

12. The method according to claim 9 or 10, wherein both the destination layer 2 address in the first layer 2 address pair and the destination layer 2 address in the second layer 2 address pair correspond to the terminal device group; and
the method further comprises:
obtaining, by the first terminal device, configuration information, wherein the configuration information comprises a mapping relationship between a service type and a transmission configuration; and
determining, by the first terminal device, a transmission configuration that is found based on the mapping relationship and that corresponds to a service type of a third V2X service, as a transmission configuration of the third V2X service; or
if no transmission configuration corresponding to a service type of a third V2X service exists in the mapping relationship, determining, by the first terminal device, that a transmission configuration of the third V2X service is the non-DRX mode, wherein
the third V2X service is a V2X service of the terminal device group, and the third V2X service is different from the first V2X service and the second V2X service.

13. The method according to any one of claims 9 to 12, wherein both the destination layer 2 address in the first layer 2 address pair and the destination layer 2 address in the second layer 2 address pair correspond to the terminal device group; and
the obtaining, by the first terminal device, the first layer 2 address pair based on the transmission configuration of the first V2X service, and obtaining the second layer 2 address pair based on the transmission configuration of the second V2X service comprises:
allocating, by an App layer of the first terminal device, a first App layer group identifier to a first App layer group, wherein the first App layer group comprises at least one V2X service of the terminal device group, and a transmission configuration of the V2X service in the first App layer group is the same; and
allocating, by the App layer of the first terminal device, a second App layer group identifier to a second App layer group, wherein the second App layer group comprises at least one V2X service of the terminal device group, and a transmission configuration of the V2X service in the second App layer group is the same, wherein
the transmission configuration of the V2X service in the first App layer group is different from the transmission configuration of the V2X service in the second App layer group.

14. The method according to any one of claims 9 to 12, wherein both the destination layer 2 address in the first layer 2 address pair and the destination layer 2 address in the second layer 2 address pair correspond to the terminal device group; and
the obtaining, by the first terminal device, the first layer 2 address pair based on the transmission configuration of the first V2X service, and obtaining the second layer 2 address pair based on the transmission configuration of the second V2X service comprises:
determining, by a V2X layer of the first terminal device for a first V2X service group, the destination layer 2 address in the first layer 2 address pair based on a transmission configuration of a V2X service in the first V2X service group, wherein the first V2X service group comprises at least one V2X service of the terminal device group, and the transmission configuration of the V2X service in the first V2X service group is the same; and
determining, by the V2X layer of the first terminal device for a second V2X service group, the destination layer 2 address in the second layer 2 address pair based on a transmission configuration of a V2X service in the second V2X service group, wherein the second V2X service group comprises at least one V2X service of the terminal device group, and the transmission configuration of the V2X service in the second V2X service group is the same, wherein
the transmission configuration of the V2X service in the first V2X service group is different from the transmission configuration of the V2X service in the second V2X service group.

15. A communication method, wherein the method comprises:
receiving, by a second terminal device, a first V2X service from a first terminal device based on a first layer 2 address pair; and
receiving, by the second terminal device, a second V2X service from the first terminal device based on a second layer 2 address pair, wherein
both a destination layer 2 address in the first layer 2 address pair and a destination layer 2 address in the second layer 2 address pair correspond to the second terminal device or a terminal device group to which the second terminal device belongs; and a transmission configuration of the first V2X service is a DRX mode, and a transmission configuration of the second V2X service is a non-DRX mode; or a transmission configuration of the first V2X service is a non-DRX mode, and a transmission configuration of the second V2X service is a DRX mode.

16. The method according to claim 15, wherein the method further comprises:
determining, by the second terminal device, the first layer 2 address pair based on the transmission configuration of the first V2X service, and determining the second layer 2 address pair based on the transmission configuration of the second V2X service.

17. The method according to claim 15 or 16, wherein the transmission configuration of the first V2X service is the DRX mode; and the method further comprises:
receiving, by the second terminal device, the first V2X service from the first terminal device based on a DRX parameter corresponding to the DRX mode.

18. The method according to claim 16, wherein both the destination layer 2 address in the first layer 2 address pair and the destination layer 2 address in the second layer 2 address pair correspond to the second terminal device; and
the determining, by the second terminal device, the first layer 2 address pair based on the transmission configuration of the first V2X service, and determining the second layer 2 address pair based on the transmission configuration of the second V2X service comprises:
after the first V2X service is triggered, determining, by a V2X layer of the second terminal device, the first layer 2 address pair;
receiving, by an access stratum AS layer of the second terminal device, capability information of the first terminal device from the first terminal device based on the first layer 2 address pair, and/or sending capability information of the second terminal device to the first terminal device, wherein the capability information of the first terminal device indicates that the first terminal device has a capability of simultaneously supporting the DRX mode and the non-DRX mode, and the capability information of the second terminal device indicates that the second terminal device has a capability of simultaneously supporting the DRX mode and the non-DRX mode;
sending, by the AS layer of the second terminal device, first indication information to the V2X layer of the second terminal device, wherein the first indication information indicates that communication between the first terminal device and the second terminal device may be performed by using different layer 2 address pairs that are for sending V2X services with different transmission configurations; and
after the second V2X service is triggered, determining, by the V2X layer of the second terminal device, the second layer 2 address pair based on the first indication information.

19. The method according to any one of claims 15 to 18, wherein both the destination layer 2 address in the first layer 2 address pair and the destination layer 2 address in the second layer 2 address pair correspond to the terminal device group, and both the first V2X service and the second V2X service are groupcast services of the terminal device group; and
the method further comprises:
determining, by the second terminal device, a groupcast service of interest; and
monitoring, by the second terminal device, a V2X service based on a destination layer 2 address corresponding to the groupcast service of interest.

20. The method according to claim 19, wherein the method further comprises:
determining, by the second terminal device based on the capability information of the second terminal device, that the communication between the first terminal device and the second terminal device may be performed by using the different layer 2 address pairs that are for receiving the V2X services with different transmission configurations; and allocating, by the second terminal device, different receiving capabilities for the first V2X service and the second V2X service.

21. The method according to claim 15, wherein the first V2X service corresponds to a first service type, and the second V2X corresponds to a second service type.

22. The method according to claim 21, further comprising:
determining, by the second terminal device based on the service type of the first V2X service, that the transmission configuration of the first V2X service is the non-DRX mode or the DRX mode; and
determining, by the second terminal device based on the service type of the second V2X service, that the transmission configuration of the second V2X service is the non-DRX mode or the DRX mode.

23. The method according to claim 22, wherein the determining, by the second terminal device based on the service type of the first V2X service, that the transmission configuration of the first V2X service is the non-DRX mode or the DRX mode comprises:
obtaining, by the second terminal device, configuration information, wherein the configuration information comprises a mapping relationship between a service type and a transmission configuration; and
determining, by the second terminal device, a transmission configuration that is found based on the mapping relationship and that corresponds to the service type of the first V2X service, as the transmission configuration of the first V2X service; or
if no transmission configuration corresponding to the service type of the first V2X service exists in the mapping relationship, determining, by the first terminal device, that the transmission configuration of the first V2X service is the non-DRX mode.

24. The method according to claim 21 or 22, wherein both the destination layer 2 address in the first layer 2 address pair and the destination layer 2 address in the second layer 2 address pair correspond to the terminal device group; and
the method further comprises:
obtaining, by the first terminal device, configuration information, wherein the configuration information comprises a mapping relationship between a service type and a transmission configuration; and
determining, by the first terminal device, a transmission configuration that is found based on the mapping relationship and that corresponds to a service type of a third V2X service, as a transmission configuration of the third V2X service; or
if no transmission configuration corresponding to a service type of a third V2X service exists in the mapping relationship, determining, by the first terminal device, that a transmission configuration of the third V2X service is the non-DRX mode, wherein
the third V2X service is a V2X service of the terminal device group, and the third V2X service is different from the first V2X service and the second V2X service.

25. The method according to any one of claims 21 to 24, wherein both the destination layer 2 address in the first layer 2 address pair and the destination layer 2 address in the second layer 2 address pair correspond to the terminal device group; and
the determining, by the second terminal device, the first layer 2 address pair based on the transmission configuration of the first V2X service, and determining the second layer 2 address pair based on the transmission configuration of the second V2X service comprises:
allocating, by an App layer of the second terminal device, a first App layer group identifier to a first App layer group, wherein the first App layer group comprises at least one V2X service of the terminal device group, and the V2X service in the first App layer group has a same transmission configuration; and
allocating, by the App layer of the second terminal device, a second App layer group identifier to a second App layer group, wherein the second App layer group comprises at least one V2X service of the terminal device group, and the V2X service in the second App layer group has a same transmission configuration, wherein
the transmission configuration of the V2X service in the first App layer group is different from the transmission configuration of the V2X service in the second App layer group.

26. The method according to any one of claims 21 to 24, wherein both the destination layer 2 address in the first layer 2 address pair and the destination layer 2 address in the second layer 2 address pair correspond to the terminal device group; and
the determining, by the second terminal device, the first layer 2 address pair based on the transmission configuration of the first V2X service, and determining the second layer 2 address pair based on the transmission configuration of the second V2X service comprises:
determining, by a V2X layer of the second terminal device, for a first V2X service group, the destination layer 2 address in the first layer 2 address pair based on a transmission configuration of a V2X service in the first V2X service group, wherein the first V2X service group comprises at least one V2X service of the terminal device group, and the transmission configuration of the V2X service in the first V2X service group is the same; and
determining, by the V2X layer of the second terminal device, for a second V2X service group, the destination layer 2 address in the second layer 2 address pair based on a transmission configuration of a V2X service in the second V2X service group, wherein the second V2X service group comprises at least one V2X service of the terminal device group, and the transmission configuration of the V2X service in the second V2X service group is the same, wherein
the transmission configuration of the V2X service in the first V2X service group is different from the transmission configuration of the V2X service in the second V2X service group.

27. A communication method, comprising:
determining, by a first terminal device, that a transmission configuration of a first V2X service in at least two V2X services is a non-DRX mode, wherein the first V2X service is any one of the at least two V2X services; and
sending, by the first terminal device, the at least two V2X services based on the non-DRX mode, wherein
receivers of the at least two V2X services are all a second terminal device or a terminal device group.

28. The method according to claim 27, wherein the at least two V2X services correspond to a same destination layer 2 address.

29. The method according to claim 27 or 28, wherein the method further comprises:
determining, by a V2X layer of the first terminal device, that a transmission configuration of the first V2X service in the at least two V2X services is the non-DRX mode; and
sending, by the V2X layer of the first terminal device, second indication information or sending no third indication information to an AS layer of the first terminal device, wherein the second indication information indicates the AS layer of the first terminal device not to enable a DRX mechanism, and the third indication information indicates the AS layer of the first terminal device to enable the DRX mechanism.

30. The method according to any one of claims 27 to 29, wherein the at least two V2X services comprise the first V2X service and a second V2X service, and a transmission configuration of the second V2X service is a DRX mode;
the method further comprises:
sending, by the V2X layer of the first terminal device, the non-DRX mode, the DRX mode, and the same destination layer 2 address corresponding to the at least two V2X services to the AS layer of the first terminal device; and
the sending, by the first terminal device, the at least two V2X services based on the non-DRX mode comprises:
sending, by the AS layer of the first terminal device, the at least two V2X services to the second terminal device or the terminal device group based on the non-DRX mode and the destination layer 2 address.

31. The method according to claim 27, wherein the first V2X service corresponds to a first service type.

32. The method according to claim 31, further comprising:
determining, by the first terminal device based on the service type of the first V2X service, that the transmission configuration of the first V2X service is the non-DRX mode or the DRX mode.

33. The method according to claim 32, wherein the determining, by the first terminal device based on the service type of the first V2X service, that the transmission configuration of the first V2X service is the non-DRX mode or the DRX mode comprises:
obtaining, by the first terminal device, configuration information, wherein the configuration information comprises a mapping relationship between a service type and a transmission configuration; and
determining, by the first terminal device, a transmission configuration that is found based on the mapping relationship and that corresponds to the service type of the first V2X service, as the transmission configuration of the first V2X service; or
if no transmission configuration corresponding to the service type of the first V2X service exists in the mapping relationship, determining, by the first terminal device, that the transmission configuration of the first V2X service is the non-DRX mode.

34. The method according to claim 31 or 32, wherein both a destination layer 2 address in a first layer 2 address pair and a destination layer 2 address in a second layer 2 address pair correspond to the terminal device group; and
the method further comprises:
obtaining, by the first terminal device, configuration information, wherein the configuration information comprises a mapping relationship between a service type and a transmission configuration; and
determining, by the first terminal device, a transmission configuration that is found based on the mapping relationship and that corresponds to a service type of a third V2X service, as a transmission configuration of the third V2X service; or
if no transmission configuration corresponding to a service type of a third V2X service exists in the mapping relationship, determining, by the first terminal device, that a transmission configuration of the third V2X service is the non-DRX mode, wherein
the third V2X service is a V2X service of the terminal device group, and the at least two V2X services comprise no third V2X service.

35. The method according to any one of claims 31 to 34, wherein the receivers of the at least two V2X services are all the terminal device group;
the method further comprises:
delivering, by an App layer of the first terminal device, a service type of each V2X service of the terminal device group to a V2X layer of the first terminal device; and
delivering, by the V2X layer of the first terminal device, the service type of each V2X service of the terminal device group and a transmission configuration of each V2X service of the terminal device group to the AS layer of the first terminal device; and
the sending, by the first terminal device, the at least two V2X services based on the non-DRX mode comprises:
determining, by the AS layer of the first terminal device, that the transmission configuration of at least one V2X service of the terminal device group is the non-DRX mode, and
sending, by the AS layer of the first terminal device, the at least two V2X services to the terminal device group based on the non-DRX mode and the destination layer 2 address.

36. A communication method, comprising:
determining, by a second terminal device, that a transmission configuration of a first V2X service in at least two V2X services is a non-DRX mode, wherein the first V2X service is any one of the at least two V2X services; and
receiving, by the second terminal device, the at least two V2X services from a first terminal device based on the non-DRX mode, wherein
transmitters of the at least two V2X services are all the second terminal device or a terminal device group to which the second terminal device belongs.

37. A communication method, comprising:
determining, by a first terminal device, a transmission configuration of a first V2X service in at least two V2X services, wherein the first V2X service is a V2X service with a highest priority in the at least two V2X services; and
if the transmission configuration of the first V2X service is a DRX mode, sending, by the first terminal device, the at least two V2X services based on the DRX mode; or if the transmission configuration of the first V2X service is a non-DRX mode, sending, by the first terminal device, the at least two V2X services based on the non-DRX mode, wherein
transmitters of the at least two V2X services are all a second terminal device or a terminal device group.

38. The method according to claim 37, wherein the at least two V2X services correspond to a same destination layer 2 address.

39. The method according to claim 37 or 38, wherein
the transmission configuration of the first V2X service in the at least two V2X services is the non-DRX mode; and the method further comprises: sending, by a V2X layer of the first terminal device, second indication information or sending no third indication information to an AS layer of the first terminal device, wherein the second indication information indicates the AS layer of the first terminal device not to enable a DRX mechanism, and the third indication information indicates the AS layer of the first terminal device to enable the DRX mechanism; or
the transmission configuration of the first V2X service in the at least two V2X services is the DRX mode; and the method further comprises: sending, by a V2X layer of the first terminal device, third indication information or sending no second indication information to an AS layer of the first terminal device, wherein the second indication information indicates the AS layer of the first terminal device not to enable a DRX mechanism, and the third indication information indicates the AS layer of the first terminal device to enable the DRX mechanism.

40. The method according to claim 37 or 38, wherein
the at least two V2X services comprise the first V2X service and a second V2X service, wherein the transmission configuration of the first V2X service is the non-DRX mode, a transmission configuration of the second V2X service is the DRX mode, and a priority of the first V2X service is higher than a priority of the second V2X service; and the method further comprises: sending, by a V2X layer of the first terminal device, the non-DRX mode, the priority of the first V2X service, the DRX mode, the priority corresponding to the second V2X service, and the same destination layer 2 address corresponding to the at least two V2X services to an AS layer of the first terminal device; and sending, by the AS layer of the first terminal device, the at least two V2X services to the second terminal device or the terminal device group based on the non-DRX mode and the destination layer 2 address; or
the at least two V2X services comprise the first V2X service and a second V2X service, wherein the transmission configuration of the first V2X service is the DRX mode, a transmission configuration of the second V2X service is the non-DRX mode, and a priority of the first V2X service is higher than a priority of the second V2X service; and the method further comprises: sending, by a V2X layer of the first terminal device, the DRX mode, the priority of the first V2X service, the non-DRX mode, the priority corresponding to the second V2X service, and the same destination layer 2 address corresponding to the at least two V2X services to an AS layer of the first terminal device; and sending, by the AS layer of the first terminal device, the at least two V2X services to the second terminal device or the terminal device group based on the DRX mode and the destination layer 2 address.

41. The method according to any one of claims 37 to 40, wherein the priority of the second V2X service is lower than the priority of the first V2X service; and
the method further comprises:
rejecting, by the V2X layer or the AS layer of the first terminal device, the second V2X service.

42. A communication method, comprising:
determining, by a second terminal device, a transmission configuration of a first V2X service in at least two V2X services, wherein the first V2X service is a V2X service with a highest priority in the at least two V2X services; and
if the transmission configuration of the first V2X service is a DRX mode, receiving, by the second terminal device, the at least two V2X services from a first terminal device based on the DRX mode; or if the transmission configuration of the first V2X service is a non-DRX mode, receiving, by the second terminal device, the at least two V2X services from a first terminal device based on the non-DRX mode, wherein
transmitters of the at least two V2X services are all the second terminal device or a terminal device group to which the second terminal device belongs.

43. A communication apparatus, comprising a module configured to perform the method according to any one of claims 1 to 42.

44. A communication apparatus, comprising at least one processor and at least one interface circuit, wherein
the interface circuit is configured to receive a signal from another apparatus other than the apparatus and transmit the signal to the processor, or send a signal from the processor to another apparatus other than the apparatus, and the processor is configured to implement the method according to any one of claims 1 to 42 by using a logic circuit or executing code instructions.

45. A computer-readable storage medium, wherein the storage medium stores a computer program or instructions, and when the computer program or the instructions are executed by a communication apparatus, the method according to any one of claims 1 to 42 is implemented.

## Amended claims

### Amended claims under Art. 19.1 PCT

1. A communication method, comprising:
determining, by a first terminal device, that a transmission configuration of a first V2X service in at least two vehicle to everything V2X services is a non-DRX mode, wherein the first V2X service is any one of the at least two V2X services; and
sending, by the first terminal device, the at least two V2X services based on the non-DRX mode, wherein
the at least two V2X services correspond to a same receiver, wherein the receiver is a second terminal device or a terminal device group.

2. The method according to claim 1, wherein the at least two V2X services correspond to a same destination layer 2 address.

3. The method according to claim 1 or 2, wherein the determining, by a first terminal device, that a transmission configuration of a first V2X service in at least two V2X services is a non-DRX mode comprises:
determining, by a V2X layer of the first terminal device, that the transmission configuration of the first V2X service is the non-DRX mode.

4. The method according to claim 3, wherein the method further comprises:
sending, by the V2X layer of the first terminal device, second indication information to an AS layer of the first terminal device, wherein the second indication information indicates the AS layer of the first terminal device not to enable a DRX mechanism for the at least two V2X services.

5. The method according to claim 1 or 2, wherein the first V2X service corresponds to a first service type.

6. The method according to claim 1 or 2, wherein the determining, by a first terminal device, that a transmission configuration of a first V2X service in at least two V2X services is a non-DRX mode comprises:
determining, by the first terminal device based on a service type of the first V2X service, that the transmission configuration of the first V2X service is the non-DRX mode; or
determining, by the first terminal device based on a mapping relationship between the first V2X service and a transmission configuration, that the transmission configuration of the first V2X service is the non-DRX mode.

7. The method according to claim 6, wherein the determining, by the first terminal device based on the service type of the first V2X service, that the transmission configuration of the first V2X service is the non-DRX mode comprises:
obtaining, by the first terminal device, configuration information, wherein the configuration information comprises a mapping relationship between a service type and a transmission configuration; and
if no transmission configuration corresponding to the service type of the first V2X service exists in the mapping relationship, determining, by the first terminal device, that the transmission configuration of the first V2X service is the non-DRX mode.

8. The method according to any one of claims 1 to 7, wherein the method is applied to a groupcast scenario.

9. The method according to any one of claims 1 to 8, wherein the transmission configuration is a Tx profile.

10. The method according to claim 2, wherein the method further comprises:
if there is a V2X service in the non-DRX mode in a V2X service corresponding to the destination layer 2 address, skipping enable, by the first terminal device, DRX for the V2X service corresponding to the destination layer 2 address.

11. A communication method, comprising:
determining, by a second terminal device, that a transmission configuration of a first V2X service in at least two V2X services is a non-DRX mode, wherein the first V2X service is any one of the at least two V2X services; and
receiving, by the second terminal device, the at least two V2X services from a first terminal device based on the non-DRX mode, wherein
the at least two V2X services correspond to a same receiver, wherein the receiver is the second terminal device or a terminal device group to which the second terminal device belongs.

12. The method according to claim 11, wherein the method is applied to a groupcast scenario.

13. The method according to claim 11 or 12, wherein the first V2X service corresponds to a first service type.

14. The method according to claim 11 or 12, wherein the at least two V2X services correspond to a same destination layer 2 address.

15. The method according to claim 11 or 12, wherein the determining, by a second terminal device, that a transmission configuration of a first V2X service in at least two V2X services is a non-DRX mode comprises:
determining, by the second terminal device based on a service type of the first V2X service, that the transmission configuration of the first V2X service is the non-DRX mode; or
determining, by the second terminal device based on a mapping relationship between the first V2X service and a transmission configuration, that the transmission configuration of the first V2X service is the non-DRX mode.

16. The method according to claim 15, wherein the determining, by the second terminal device based on a service type of the first V2X service, that the transmission configuration of the first V2X service is the non-DRX mode comprises:
obtaining, by the second terminal device, configuration information, wherein the configuration information comprises a mapping relationship between a service type and the transmission configuration; and
if no transmission configuration corresponding to the service type of the first V2X service exists in the mapping relationship, determining, by the second terminal, that the transmission configuration of the first V2X service is the non-DRX mode.

17. A communication apparatus, comprising a module configured to perform the method according to any one of claims 1 to 10, or comprising a module configured to perform the method according to any one of claims 11 to 16.

18. A communication apparatus, comprising at least one processor and at least one interface circuit, wherein
the interface circuit is configured to receive a signal from another apparatus other than the apparatus and transmit the signal to the processor, or send a signal from the processor to another apparatus other than the apparatus, and the processor is configured to implement the method according to any one of claims 1 to 10 or the method according to any one of claims 11 to 16 by using a logic circuit or executing code instructions.

19. A communication apparatus, comprising at least one processor, wherein the at least one processor implements the method according to any one of claims 1 to 10 or the method according to any one of claims 11 to 16 by reading and executing software code stored in a memory.

20. A computer-readable storage medium, wherein the storage medium stores a computer program or instructions, and when the computer program or the instructions are executed by a communication apparatus, the method according to any one of claims 1 to 10 or the method according to any one of claims 11 to 16 is implemented.

21. A communication system, comprising a first terminal device and a second terminal device, wherein
the first terminal device is configured to perform the method according to any one of claims 1 to 10; and
the second terminal device is configured to perform the method according to any one of claims 11 to 16.

22. A computer program product, wherein the computer program product stores instructions, and when the instructions are run on a computer, the method according to any one of claims 1 to 10 is performed, or the method according to any one of claims 11 to 16 is performed.
